# EUROPEAN PATENT SPECIFICATION

(11) **EP 3 191 304 B1**
(45) Date of publication and mention of the grant of the patent: **27.06.2018**
(21) Application number: 15762986.6
(22) Date of filing: 11.09.2015
(51) Int. Cl.: B32B 27/30, B32B 1/02, B32B 1/08, B32B 3/20

(54) **MULTILAYERED ROTOMOULDED ARTICLES**
MEHRSCHICHTIGE ROTATIONSGEFORMTE GEGENSTÄNDE
ARTICLES ROTOMOULÉS MULTICOUCHES

(30) Priority: 11.09.2014 EP 14290271
(43) Date of publication of application: 19.07.2017
(73) Proprietor: Total Research & Technology Feluy, 7181 Seneffe (BE); Polynt Composites France, 62320 Drocourt (FR)
(72) Inventor: MAZIERS, Eric, B-7180 Seneffe (BE); FOUSSARD, Thierry, F-62530 Hersin Coupigny (FR); DEVIS, Geoffrey, F-62440 Harnes (FR)
(74) Representative: Raboin, Jean-Christophe
(86) International application number: PCT/EP2015/070813
(87) International publication number: WO 2016/038181

(56) References cited:
- WO-A1-2014/135459
- DE-A1- 10 008 321
- GB-A- 2 417 462
- JP-A- S4 959 172
- US-A- 4 504 530
- US-A1- 2006 196 404

## Description

### Field of the invention

The invention pertains to rotomoulded articles. In particular the invention relates to multilayered rotomoulded articles having at least two layers, and to methods for the manufacture thereof.

### Background of the invention

The process of rotational moulding, also called rotomoulding, of plastic has been known since the 1940s for the preparation of hollow plastic articles.

This process involves adding a thermoplastic polymer into a mould, rotating the mould so that all the points of the internal surface of the mould are in contact with the polymer while heating the mould, so as to deposit the aforementioned molten polymer on the internal surface of the mould. Thereafter, a stage of cooling allows the solidification of the plastic article, which is then removed from the mould.

Rotational moulding is advantageous because it avoids applying stress and strain to the plastic, which generally occurs in other transformations, for example in injection moulding. Indeed, the plastic does not undergo malaxation or compaction as in an extruder or in injection moulding. Rotational moulding is particularly suitable for preparing large-sized articles, such as furniture, tanks, drums, reservoirs etc.

The most commonly used polymer in rotational moulding is polyethylene, but other polymers such as vinyl polychlorides (PVC), polyamides, polycarbonates and polypropylenes can also be used. However, these polymers typically tend to deform and shrink somewhat within the mould, causing a considerable withdrawal from the mould and non-uniform wall thicknesses. Moreover, these polymers, used alone, are characterized either by slow coalescence, or by a raised melting point, which increases the duration of the production cycle. Polyesters, on the other hand, often lack in good thermal and mechanical properties. Thus, monolayered rotomoulded articles of polyester are not optimal.

However, certain applications may require further improvements of the mechanical and/or thermal properties of the moulded articles. There thus exists a need to produce articles by rotational moulding, with minimal shrinkage and warpage and improved mechanical and/or thermal properties.

Therefore, an object of this invention is to provide rotationally moulded (rotomoulded) comprising a polyester and having improved mechanical and/or thermal properties.

Another object of this invention is to provide rotomoulded articles with good mechanical properties, in particular improved impact strength and/ or stiffness.

Another object of this invention is to provide moulded multilayered articles having good adherence between the layers. Another object of this invention is to provide moulded articles having a uniform wall thickness.

At least one of the objects mentioned above is carried out with the present invention.

### Summary of the invention

The applicant found in a surprising way that by providing a rotomoulded article comprising (i) at least one first layer comprising fibers embedded in a composition comprising at least one vinyl ester resin, and (ii) at least one second layer comprising a polyester, for example poly(lactic acid), the disadvantages mentioned above may be overcome.

According to a first aspect of the present invention a rotomoulded article is provided comprising
(i) at least one layer A comprising fibers embedded in a composition comprising at least one vinyl ester resin; and
(ii) at least one layer B comprising:
   - from 40 to 100 %, preferably from 75 to 100 %, by weight relative to the total weight of said layer B of at least one thermoplastic polyester;
   - from 0 to 60 % by weight relative to the total weight of said layer B of a polyolefin composition; said composition comprising at least one polyolefin, preferably said at least one polyolefin is polyethylene; and
   - from 0 to 20 % by weight relative to the total weight of said layer B of at least one additive selected from compatibilizing agent and/or impact modifier;
   wherein at least one layer A is contacting one layer B.

The multilayered rotomoulded article according to the first aspect of the invention has good adherence between the layers. Preferably the at least one layer A contacting the one layer B shows an adhesion to said layer B, said adhesion being such that said at least one layer A and said layer B cannot be separated when using a parting force of at most 510 N/cm³, said force being exerted by a pulling device on a 5 cm diameter circular sample in a direction perpendicular to the adhesion plan.

According to a second aspect, the present invention also encompasses a method for preparing a rotomoulded article according to the first aspect of the invention, comprising the steps of
(i) providing a mould;
(ii) optionally applying to at least a part of the interior wall of said mould at least one layer A comprising fibers embedded in a composition comprising at least one vinyl ester resin;
(iii) moulding in the mould at least one layer B comprising:
   - from 40 to 100 %, preferably from 75 to 100 %, by weight relative to the total weight of said layer B of at least one thermoplastic polyester;
   - from 0 to 60 % by weight relative to the total weight of said layer B of a polyolefin composition; said composition comprising at least one polyolefin; and
   - from 0 to 20 % by weight relative to the total weight of said layer B of at least one additive selected from compatibilizing agent and/or impact modifier;
   thereby obtaining a moulded layer B comprising at least one outer surface and one inner surface,
(iv) optionally applying to at least a part of the inner surface of the moulded layer B at least one layer A comprising fibers embedded in a composition comprising at least one vinyl ester resin;
(v) optionally applying to at least a part of the outer surface of the moulded layer B at least one layer A comprising fibers embedded in a composition comprising at least one vinyl ester resin;
wherein at least one of steps (ii), (iv) or (v) is not optional, and at least one layer A is contacting one layer B, thereby obtaining the article according to the first aspect of the invention.

### Brief Description of the Figures

Figures 1 to 7: each represents a graph showing the temperature cycle of a rotomoulding process to prepare rotomoulded articles.
Figures 8-13 represent schematic overview of the layer structure for various embodiments of the rotomoulded articles described herein.
Figures 14 and 15 schematically represent a test device used for the hydrolysis test.

### Detailed Description of the Invention

When describing the invention, the terms used are to be construed in accordance with the following definitions, unless a context dictates otherwise.

As used in the specification and the appended claims, the singular forms "a", "an," and "the" include both singular and plural referents unless the context clearly dictates otherwise. By way of example, "a resin" means one resin or more than one resin.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

Reference throughout this specification to "one embodiment" or "an embodiment" means that a particular feature, structure or characteristic described in connection with the embodiment is included in at least one embodiment of the present invention. Thus, while some embodiments described herein include some but not other features included in other embodiments, combinations of features of different embodiments are meant to be within the scope of the invention, and form different embodiments, as would be understood by those in the art.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

The term "about" as used herein when referring to a measurable value such as a parameter, an amount, a temporal duration, and the like, indicate that a value includes the standard deviation of error for the device or method being employed to determine the value. Preferably the term "about" is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whenever the term "substituted" is used herein, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation from a reaction mixture.

The term "hydroxyl" or "hydroxy" as used herein refers to the group -OH.

The term "carboxy" or "carboxyl" or "hydroxycarbonyl" as used herein refers to the group -C(=O)OH.

The term "C₁₋₆ alkyl", as a group or part of a group, refers to a hydrocarbyl group of Formula -CₙH₂ₙ₊₁ wherein n is a number ranging from 1 to 6. Thus, for example, C₁₋₆ alkyl groups include all linear, or branched alkyl groups having 1 to 6 carbon atoms, and thus includes for example methyl, ethyl, *n*-propyl, *i*-propyl, butyl and its isomers (e.g. *n*-butyl, *i*-butyl and *t*-butyl); pentyl and its isomers, hexyl and its isomers.

When the suffix "ene" is used in conjunction with an alkyl group, i.e. "alkylene", this is intended to mean the alkyl group as defined herein having two single bonds as points of attachment to other groups. As used herein, the term "C₁₋₆ alkylene", by itself or as part of another substituent, refers to C₁₋₆ alkyl groups that are divalent, i.e., with two single bonds for attachment to two other groups. Non-limiting examples of C₁₋₆ alkylene groups include methylene (-CH₂-), ethylene (-CH₂-CH₂-), methylmethylene (-CH(CH₃)-), 1-methyl-ethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers.

The term "C₂₋₆ alkenyl" refers to an unsaturated hydrocarbyl group, which may be linear, or branched comprising one or more carbon-carbon double bonds and comprising from 2 to 6 carbon atoms. Examples of C₂₋₆ alkenyl groups are ethenyl, 2-propenyl, 2-butenyl, 3-butenyl, 2-pentenyl and its isomers, 2-hexenyl and its isomers, 2,4-pentadienyl, and the like. Where alkenyl groups as defined herein are divalent groups having single bonds for attachment to two other groups, they are termed "alkenylene".

The term "C₂₋₆ alkynyl" refers to an unsaturated hydrocarbyl group, which may be linear, or branched comprising one or more carbon-carbon triple bonds and comprising from 2 to 6 carbon atoms. Non limiting examples of C₂₋₆ alkynyl groups include ethynyl, 2-propynyl, 2-butynyl, 3-butynyl, 2-pentynyl and its chain isomers, 2-hexynyl and its chain isomers, and the like. Where alkynyl groups as defined herein are divalent groups having single bonds for attachment to two other groups, they are termed "alkynylene".

The term "C₁₋₆ alkyloxycarbonyl" as a group or part of a group, refers to a group of formula -C(=O)O-R^{a} wherein R^{a} is C₁₋₆ alkyl as defined herein.

The term "C₆₋₁₂aryl", as a group or part of a group, refers to a polyunsaturated, aromatic hydrocarbyl group having a single ring (i.e. phenyl) or multiple aromatic rings fused together (e.g. naphthalene), or linked covalently, typically containing 6 to 12 atoms; wherein at least one ring is aromatic. The aromatic ring may optionally include one to two additional rings (either cycloalkyl, heterocyclyl or heteroaryl) fused thereto. Examples of suitable aryl include C₆₋₁₀aryl, more preferably C₆₋₈aryl. Non-limiting examples of C₆₋₁₂aryl comprise phenyl, biphenylyl, biphenylenyl, or 1-or 2-naphthanelyl; 5- or 6-tetralinyl, 1-, 2-, 3-, 4-, 5-, 6-, 7- or 8-azulenyl, 4-, 5-, 6 or 7-indenyl, 4- or 5-indanyl, 5-, 6-, 7- or 8-tetrahydronaphthyl, 1,2,3,4-tetrahydronaphthyl, and 1,4-dihydronaphthyl. When the suffix "ene" is used in conjunction with an aryl group, this is intended to mean the aryl group as defined herein having two single bonds as points of attachment to other groups. Suitable arylene groups include 1,4-phenylene, 1,2-phenylene, 1,3-phenylene, biphenylylene, naphthylene, indenylene, and the like. Where a carbon atom in an aryl group is replaced with a heteroatom, the resultant ring is referred to herein as a heteroaryl ring. Where a carbon atom in a cycloalkyl group is replaced with a heteroatom, the resultant ring is referred to herein as a heterocyclyl ring.

The term "C₆-₁₂arylC₁₋₆alkyl", as a group or part of a group, means a C₁₋₆alkyl as defined herein, wherein at least one hydrogen atom is replaced by at least one C₆₋₁₂aryl as defined herein. Non-limiting examples of C₆-₁₂arylC₁₋₆alkyl group include benzyl, phenethyl, dibenzylmethyl, 3-(2-naphthyl)-butyl, and the like.

The term "C₆₋₁₂arylC₂₋₆alkenyl", as a group or part of a group, means a C₁₋₆alkenyl as defined herein, wherein at least one hydrogen atom is replaced by at least one C₆₋₁₂aryl as defined herein.

The terms described above and others used in the specification are well understood to those in the art.

### 1. Layer A

The rotomoulded article described herein comprises at least one layer A, comprising fibers embedded in a composition comprising at least one vinyl ester resin. The vinyl ester resin is a thermosetting resin. The layer(s) A may provide improved mechanical properties to the rotomoulded article, such as an improved stiffness.

In an embodiment, the rotomoulded article according to the first aspect of the invention forms a hollow body with an inner surface and an outer surface. In an embodiment, at least one layer A will form an outer layer of the article, and is disposed on at least a part of the outer surface of the article. In another embodiment, at least one layer A will form the inner layer of the article, and is disposed on at least a part of the inner surface of the article.

In an embodiment, the rotomoulded article according to the first aspect of the invention forms a hollow body with an inner surface and an outer surface, and wherein at least one layer A is disposed on at least a part of the outer surface of the article and/or disposed on at least a part of the inner surface of the article.

In another embodiment, the article comprises at least one layer A as inner layer and at least one layer A as outer layer, so at least one layer A is disposed on at least a part of the inner surface of the article and at least one layer A is disposed on at least a part of the outer surface of the article.

Preferably, layer A is a laminate (stratified comprising a matrix resin and fibers embedded within at least a portion of the matrix resin), also known as "polymer matrix composite material", the matrix resin is a composition comprising at least one vinyl ester resin. The term "laminate" as used herein has its ordinary meaning as known to those skilled in the art and thus refers to association of resins and structural reinforcement elements. The matrix resin may be present in a partially cured or uncured state.

The thickness of each layer A can typically range between 0.1 mm and 10 mm, preferably between 0.1mm and 5mm, preferably between 0.5 mm and 3 mm.

Each layer A may cover the underlying layer completely or partially. Thus, in certain embodiments, some parts of the surface of the rotomoulded article may be constituted by one or more layers A, whereas other parts of the surface may be constituted by another layer, such as layer B.

The rotomoulded article may comprise a single layer A, or two or more layers A. In some embodiments, the rotomoulded article comprises at least two layers A, for example at least three layers A, for example at least four layers A, for example at least five layers A. The type of fibers and/or resin composition in two (adjacent) layers A may be identical. However, it is envisaged that two or more layers A may comprise different types of fibers and/or resin composition. In certain embodiments, the article may comprise at least one first layer A comprising carbon fibers, and at least one second layer A comprising glass fibers. In certain embodiments, the article may comprise more than one layer A comprising glass fibers (fiberglass).

Each layer A comprises fibers embedded in a composition comprising at least one vinyl ester resin.

### 1.1. Fibers

The term "fiber" as used herein has its ordinary meaning as known to those skilled in the art and may include one or more fibrous materials adapted for the preparation of layer A. Fibers may take the form of any of continuous fibers, short fibers, flakes, whiskers, sheets, plies, powders, wires, microspheres, nanospheres; and combinations thereof.

In some embodiments, the fibers may further adopt any of unidirectional, multi-dimensional (e.g. two-or three-dimensional), non-woven, woven, knitted, stitched, wound, and braided configurations, as well as swirl mat, felt mat, and chopped mat structures. In some embodiments, the fibers can be provided as fabrics that can have a plain, twill, harness satin, or crow-foot satin weave.

The composition of the fibers may be varied as necessary. In some preferred embodiment, suitable fibers are selected from the group comprising glass fibers, carbon fibers, aramid fibers (such as Kevlar® fibers), poly(lactic acid) (PLA) fibers, polypropylene (PP) fibers, PLA stereocomplex fibers, poly(lactic acid)-poly(butylene adipate-co-terephthalate) (PLA-PBAT) fibers, quartz fibers (such as Astroquartz®), polyethylene fibers, polyester fibers, graphite fibers, poly-p-phenylene-benzobisoxazole (PBO) fibers, boron fibers, silicon carbide fibers (such as Tyranno® fibers or Nicalon® fibers), polyamide fibers (such as Nylon® fibers), silicon nitride fibers, aluminum oxide fibers (such as Nextel® fibers), metal fibers, natural fibers, thermoplastic bi-component fibers, maleic anhydride grafted thermoplastic fibers, ozone treated thermoplastic fibers, gamma irradiated thermoplastic fiber; and combinations thereof. In some more preferred embodiments, the fibers are selected from the group comprising carbon fibers, fiberglass, and aramid fibers, or blends thereof.

Metals and their alloys may be employed as preferable conductive constituents in view of their relatively high electrical conductivity if conductive fibers are envisaged. Examples of metals and alloys may include, but are not limited to, silver, gold, nickel, copper, aluminum, and alloys and mixtures thereof. In certain embodiments, the morphology of the conductive metal additives may include one or more of fibers, flakes, powders, wires, microspheres, and nanospheres, singly or in combination.

### 1.2. Composition for embedding the fibers of layer A

In layer A, the fibers are embedded in a "resin composition" also referred as "composition" comprising at least one vinyl ester resin. The "resin composition" is a thermosetting composition.

In some preferred embodiments, the vinyl ester resin, is the reaction product of a process comprising the step of contacting: at least one compound comprising at least one epoxy group per compound; preferably having at least two epoxy groups per compound; with at least one compound selected from the group comprising compound of formula R¹-C(=O)-O-R², and compound of formula (a); and optionally at least one isocyanate; 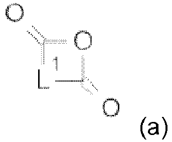 wherein R¹ is selected from the group comprising C₁₋₆alkyl, C₂₋₆alkenyl, C₂₋₆alkynyl, C₆₋₁₂aryl, C₆₋₁₂arylC₁₋₆alkyl, and C₆₋₁₂arylC₂₋₆alkenyl; each group being optionally substituted with one or more substituents independently selected from the group comprising C₁₋₆alkyl, C₂₋₆alkenyl, C₂₋₆alkynyl; carboxyl, hydroxyl, C₁₋₆alkyloxycarbonyl, C₂₋₆alkenyloxycarbonyl, C₂₋₆ alkynyloxycarbonyl and C₆₋₁₂ aryl, and wherein R² is hydrogen or is selected from the group comprising C₁₋₆alkyl, C₂₋₆alkenyl, C₂₋₆alkynyl; C₆₋₁₂aryl, C₆₋₁₂arylC₁₋₆alkyl, and C₆₋₁₂arylC₂₋₆alkenyl; each group being optionally substituted with one or more substituents independently selected from the group comprising C₁₋₆alkyl, C₂₋₆alkenyl, C₂₋₆alkynyl; carboxyl, hydroxyl, C₁₋₆alkyloxycarbonyl, C₂₋₆alkenyloxycarbonyl, C₂₋₆alkynyloxycarbonyl; and
wherein L¹ is a C₂₋₆ alkenylene optionally substituted with one or more hydroxyl or C₁₋₆ alkyl.

In some preferred embodiments, the vinyl ester resin, is the reaction product of a process comprising the step of contacting (i) at least one compound comprising at least one epoxy group per compound; preferably having at least two epoxy groups per compound; with (ii) at least one acrylic or methacrylic acid, or an ester thereof, preferably with at least one methacrylic acid or ester thereof.

Suitable compound comprising at least one epoxy group per compound may be produced by the attachment of an epoxide group to both ends of a paraffinic hydrocarbon chain (for example, diepoxides derived from butanediol) or of a polyether chain, such as a-ω-diepoxy polypropylene glycol. Diepoxy resins suitable for said reaction include but are not limited to vinylcyclo hexene dioxide, 3,4-epoxycyclohexylmethyl 3,4-epoxycyclohexanemono carboxylate, 3-(3,4-epoxycyclohexyl)-8,9-epoxy-2,4-dioxaspiro-[5.5]undecane, bis(2,3-epoxycyclopentyl) ether, bis(3,4-epoxy-6-methylcyclohexyl) adipate and resorcinol diglycidyl ether. Other suitable compound comprising at least one epoxy group per compound can contain more than two epoxide functional groups per molecule, such as epoxidized soya oils, polyglycidyl ethers of phenolic resins of the novolak type, p-aminophenoltriglycidyl ether or 1,1,2,2-tetra(p-hydroxyphenyl)ethane tetraglycidyl ether. A preferred class of suitable compound comprising at least one epoxy group per compound comprises the epoxy polyethers obtained by reacting an epihalohydrin (such as epichlorohydrin or epibromohydrin) with a polyphenol, optionally in the presence of an alkali. Suitable polyphenols include bis(4-hydroxyphenyl)-2,2-propane (i.e. bisphenol A); resorcinol, catechol, hydroquinone, bis(4-hydroxyphenyl)-1,1-isobutane, 4,4-dihydroxybenzophenone; bis(4-hydroxyphenyl-1,1-ethane; bis(2-hydroxyphenyl)-methane; 1,5-hydroxynaphthalene, and any combination thereof. Other suitable compounds comprising at least one epoxy group per compound can be a polyglycidyl ether of a polyphenol, such as bisphenol A; such as epoxy resins of the novolac type. Another class of epoxy resin suitable for the reaction comprises the hydrogenated epoxy resin based on bisphenol A such as Eponex 1510 from Shell. Other examples of suitable epoxy resins are the polyglycidyl ethers of polyhydric alcohols. These compounds may be derived from such polyhydric alcohols as ethylene glycol, diethylene glycol, triethylene glycol, 1,2- propylene glycol, 1,4-butylene glycol, 1,5-pentanediol, 1,2,6-hexane- triol, glycerol, trimethylolpropane, and bis(4-hydroxycyclohexyl)-2,2- propane.

Preferably, the at least one compound comprising at least one epoxy group per compound is the reaction product of a process comprising the step of contacting at least one epihalohydrin with at least one polyphenol. Preferably, the epihalohydrin is selected from epichlorohydrin or epibromohydrin. Preferably, the polyphenol is selected from the group comprising bis(4-hydroxyphenyl)-2,2-propane, bis(4-hydroxyphenyl)-1,1-isobutane, 4,4-dihydroxybenzophenone; bis(4-hydroxyphenyl-1,1-ethane; bis(2-hydroxynaphenyl)-methane; resorcinol, catechol, hydroquinone, 1,5-hydroxynaphthalene, and any combination thereof.

Preferably, the vinyl ester resin, is the reaction product of a process comprising the step of contacting at least one compound comprising at least one epoxy group per compound, with at least one methacrylic acid or an ester thereof, wherein the at least one compound comprising at least one epoxy group per compound is produced by contacting an epihalohydrin with bis(4-hydroxyphenyl)-2,2-propane. Preferably, the at least one compound comprising at least one epoxy group per compound is a polyglycidyl ether of a polyphenol. Preferably the vinyl ester resin comprises the reaction product of polyglycidyl ether of a polyphenol with methacrylic acid. The composition of the at least one layer A may further comprise one or more constituents selected from the group comprising reactive diluents, solvents, driers, other curing agents; catalysts; additives, fillers, and stabilizers.

In an embodiment, the composition of the at least one layer A comprises at least one reactive diluent, preferably selected from the group comprising styrene: vinyl toluene: (meth)acrylate (such as methylmethacrylate, acrylate, methacrylate, glycidyl methacrylate, hydroxyl methyl methacrylate, hydroxy propylmethacrylate, acrylic acid, and methacrylic acid); and a combination thereof. Preferably, the reactive diluent is selected from the group comprising vinyl toluene; (meth)acrylate (such as methylmethacrylate, acrylate, methacrylate, glycidyl methacrylate, hydroxyl methyl methacrylate, hydroxy propylmethacrylate, acrylic acid, and methacrylic acid); and a combination thereof.

Preferably, the composition of the at least one layer A further comprises:
- at least one reactive diluent, preferably wherein said at least one reactive diluent is selected from the group comprising styrene; vinyl toluene; (meth)acrylate; and a combination thereof, and/or
- at least one catalyst, wherein the at least one catalyst is an organic peroxide, preferably the at least one catalyst is methyl ethyl ketone peroxide.

In an embodiment, the composition comprises at least 45 % by weight of styrene, for example at least 46% of styrene, for example at least 47 % by weight of styrene with % by weight based on the total weight of the composition. In an embodiment, the composition comprises at most 50 % by weight of styrene, for example at most 49 % by weight, for example at most 48 % by weight of styrene.

Preferably, the composition is substantially styrene free. As used herein, the term "substantially free" means that the material being discussed is present in the composition, if at all, as an incidental impurity. In other words, the material does not affect the properties of the composition. In an embodiment, the composition comprises at most 0.01 % by weight of styrene, with % by weight based on the total weight of the composition, preferably at most 0.001 % by weight. Preferably the composition is styrene free, with the meaning that styrene is not present in the composition at all.

In an embodiment, the composition of the at least one layer A further comprises one or more components selected from a drier and a catalyst. As used herein, the term "drier" (which is also referred to synonymously as "accelerator" or "promoter" -) refers to organometallic compounds and/or amine compounds such as aromatic tertiary amines. They are added to unsaturated resins in order to appreciably reduce their drying times, i.e. the transition of their liquid films to the solid phase. Driers are available either as solids or in solution. The driers are present in amounts expressed as weight percent of the metal based on the weight of resin solids unless stated otherwise.

In some preferred embodiments of the invention, the resin composition of the at least one layer A comprises at least one metal salt of an organic acid and optionally at least one amine promoter, for example a cobalt salt of an organic acid and optionally at least one aromatic tertiary amine. Preferably the organic acid is a carboxylate. Preferably, the organic acid is selected from branched-chain or straight-chain saturated and unsaturated aliphatic, aromatic and alicyclic monocarboxylic acids having 6 to 22 carbon atoms, cycloaliphatic monocarboxylic acids having 6 to 10 carbon atoms, or mixtures of these acids, preferably the organic acid is selected from the group comprising 2-ethylhexanoic acid, 2-ethylbutanoic acid, 2,2-dimethylpentanoic acid, 2-ethylpentanoic acid, 2-ethyl-4-methylpentanoic acid, isooctanoic acid, isononanoic acid, neononanoic acid, nonanoic acid, isodecanoic acid, neodecanoic acid, 2-ethyldecanoic acid, isotridecanoic acid, isotetradecanoic acid, n-hexanoic acid, n-octanoic acid, n-decanoic acid, n-dodecanoic acid, cyclopentanoic acid, cyclohexanoic acid, 1,2-dimethylcyclohexanoic acid, cycloheptanoic acid, myristic acid, stearic acid, arachidic acid, behenic acid, oleic acid, linoleic acid, tall oil fatty acid, erucic acid, p-tert-butylbenzoic acid, monobutyl maleate, monodecyl phthalate, naphthenic acid and mixtures thereof. In an embodiment, the optional aromatic tertiary amine can be selected from the group comprising dimethylaniline, diethylaniline, dimethylparatoluidine and combinations thereof. Preferably, the composition of the at least one layer A further comprises at least one drier, wherein the at least one drier is a metal salt of an organic acid, preferably the at least one drier is cobalt 2-ethylhexanoate.

In some preferred embodiments of the invention, the resin composition of the at least one layer A comprises at least one catalyst. Preferably, the at least one catalyst is an organic peroxide, preferably the at least one catalyst can be selected from peroxides derived from ketone, such as Methyl Ethyl Ketone Peroxide, Methyl Iso Butyl Ketone Peroxide, Acetyl Acetone Peroxide or Cyclohexanone Peroxide; Alcoyl Hydro Peroxides, such as Tert-Butyl Hydro Peroxide or Cumene Hydro peroxide; Diacyl peroxides, such as Benzoyl Peroxide or Lauroyl Peroxide; Dialcoyl peroxides such as Dicumyl Peroxide or Di-tert-Butyl Peroxide; Peresters such as Tert-Butyl Peroctoate or Tert-Butyl Perbenzoate; preferably the at least one catalyst is methyl ethyl ketone peroxide.

### 1.3. Layer A

In some embodiments, layer A can comprise from 20 to 50% fiber weight, for example from 25 to 35% fiber weight, based on the total weight of layer A. In some embodiments, layer A can comprise from 50 to 80 weight% of the polymer resin, based on the total weight of layer A. In particular embodiments, layer A comprises from 25 to 35 wt % of fibers, and from 65 to 75 wt % of the resin.

The present inventors have found that layer A comprising fibers embedded in resin composition as described herein adhere particularly well to adjacent layers B. Without wishing to be bound by theory, it is believed that during the curing of the article, the vinyl ester resin, present in the composition of layer A reacts with carboxyl and/or hydroxyl groups of the polyester of layer B. Furthermore, the resin composition provide excellent mechanical and chemical characteristics to layer A including high heat resistance, high hardness, high dimension stability and high chemical resistance, and a barrier to humidity.

In an embodiment, the rotomoulded article forms a hollow body with an inner surface and an outer surface, with preferably at least one layer A disposed on at least a part of the outer surface of the article and wherein the outer surface of the article is further coated with coating composition.

In an embodiment, the coating composition is fire-retardant. Preferably, the coating composition comprising at least one agent for expansion by thermal decomposition selected from the group comprising melamine and melamine derivatives, guanidine, glycine, urea, triisocyanurates and azodicarbonamide, preferably melamine and derivatives; and more preferably melamine.

In an embodiment, said coating composition further comprises at least one phosphorus derivative and/or at least one boric acid derivative, preferably ammonium borate, preferably wherein the at least one phosphorus derivative is preferably a phosphorus derivative selected from: phosphonates and/or phosphates and/or corresponding acids and/or salts or red phosphorus, and particularly preferably selected from: urea phosphates or ammonium phosphates and/or ammonium polyphosphates, and more preferably from: ammonium polyphosphates. In a preferred embodiment, said coating composition comprises at least one phosphate component selected from the group comprising of ammonium polyphosphate (APP) and melamine phosphates and mixtures thereof.

In a preferred embodiment, said coating composition further comprises at least one agent which is a precursor of charring. Preferably said at least one agent is selected from the group comprising polyfunctional polyols, preferably with a functionality of at least 4, including alkoxylated polyfunctional polyols, and preferably selected from: sugars, starch, potato flour, pentaerythritol (PET) and/or derivatives of PET and/or erythritol and/or sorbitol, these derivatives of PET being alkoxylated pentaerythritol (PET), and/or di- and/or tripentaerythritol and more preferably selected from: pentaerythritol and/or derivatives of PET and more preferably still pentaerythritol and alkoxylated pentaerythritol.

In an embodiment, the outer layer of the article comprises at least one layer A. In an embodiment, the outer layer comprises at least one layer A, and the coating composition is provided on said at least one layer A.

### 2. Layer B

In addition to the layer(s) A, the rotomoulded article of the invention further comprises at least one layer B, wherein at least one layer A is contacting one layer B. Layer B comprises a composition comprising:
- from 40 to 100 %, preferably from 75 to 100 %, by weight relative to the total weight of said layer B of at least one thermoplastic polyester;
- from 0 to 60 % by weight relative to the total weight of said layer B of a polyolefin composition; said composition comprising at least one polyolefin; and
- from 0 to 20 % by weight relative to the total weight of said layer B of at least one additive selected from compatibilizing agent and/or impact modifier.

In some embodiments, each layer B has an average thickness of at least 50 µm, for example at least 100 µm, for example from 100 µm to 100 mm.

### 2.1 Thermoplastic polyester (e.g. PLA)

Preferably, the at least one polyester used in layer B is an at least one thermoplastic polyester. The thermoplastic polyester is preferably selected from the group comprising poly(lactic acid) (PLA), polyhydroxyalkanoate (PHA), polycaprolactone (PCL), copolyesters, polyesteramides, copolymer of polylactic acid (e.g. such as copolymer of lactic acid and trimethylene carbonate, lactic acid and urethane), and any combination thereof. A non-limiting example of a suitable copolyester includes Tritan™ copolyester from Eastman: a copolyester based on the use of 2,2,4,4-tetramethyl-1,3-cyclobutanediol (TMCD) as a comonomer.

The thermoplastic polyester, for example PLA, is preferably present in an amount ranging from at least 40% by weight, for example at least 50 % by weight, for example at least 60 % by weight, for example at least 65 % by weight, for example at least 70 % by weight, for example at least 75 % by weight, for example at least 80 % by weight, for example at least 90 % by weight, for example at least 95 % by weight, for example at least 96 % by weight, for example at least 97 % by weight, for example at least 98 % by weight, for example at least 99 % by weight, for example at least 99.4 % by weight, for example at least 99.5 % by weight up to 100 % by weight by weight based on the total weight of layer B (of the composition of layer B). In particular embodiments, the thermoplastic polyester, for example PLA, is present in an amount ranging from 50 to 100 % by weight of layer B, for example the polyester is present in an amount ranging from 60 to 100 % by weight of layer B, for example, the polyester is present in an amount ranging from 70 to 100 % by weight of layer B, more preferably 75 to 100 % by weight. In certain embodiments, the polyester, for example PLA, is present in an amount ranging from 70 to 100 % by weight of layer B, more preferably from 90 to 100% by weight by weight of layer B. Most preferably, the polyester is PLA.

The PLA (also known as polylactide) is preferably a thermoplastic resin derived from renewable resources. Suitable PLA also includes copolymers of lactic acid. For instance, copolymers of lactic acid and trimethylene carbonate according to EP application number 11167138 and copolymers of lactic acid and urethanes according to WO 2008/037772 and PCT application number PCT/EP2011/057988. In some embodiments, the introduction of comonomers to PLA increases the ductility (i.e. decreases the brittleness) of the PLA.

Preferably, the PLA used in layer B of the rotomoulded article of the invention can be a poly-L-lactide (PLLA), a poly-D-lactide (PDLA) and/or a mixture of PLLA and PDLA. By PLLA, it is meant a polymer in which the majority of the repetitive units are monomers of L-lactide and by PDLA, a polymer in which the majority of the repetitive units are D-lactide monomers. Stereocomplexes of PLLA and PDLA, as described for example in WO 2010/097463, can also be used. Preferably, the polylactide used is the PLLA. Preferably, the PLLA or the PDLA respectively have an optical purity (called isomeric purity) of the L or D isomer, which is higher than 92 % by weight of the PLA, preferably higher than 95 % by weight. An optical purity from at least 98.5 % by weight is more preferred. The PLLA used in layer B thus includes a content of D isomer lower than 8 % by weight, preferably lower than 5 % by weight, more preferably lower or equal to 1 % by weight of the PLLA. By analogy, the PDLA includes a content of L isomer lower than 8 % by weight, preferably lower than 5 % by weight, more preferably lower or equal to 1 % by weight of the PDLA.

PLA (PLLA or PDLA) preferably has a weight average molecular weight (Mw) ranging between 30.000 and 500.000 g/mol, more preferably between 50.000 and 400.000 g/mol, even more preferably between 50.000 and 300.000 g/mol. The weight average molecular weight is measured by chromatography by gel permeation (GPC) compared to polystyrene standards in chloroform at 30°C. The ratio of the weight average molecular weight (Mw) to the Mn is generally between 1.0 and 5.0.

The process for preparing PLA is well-known by the person skilled in the art. For example PLA can be obtained by the process describes in documents WO1998/002480, WO 2010/081887, FR2843390, US5053522, US 5053485 or US5117008.

Preferably, the PLA used in layer B has R-OH and R-COOH, chain termination, and was obtained using a monoalcohol as co-initiator and transfer agent of the polymerization. Preferably, the PLA used in layer B has a crystallinity index (CI), as measured by XRD, of at least 5%. Preferably the crystallinity index of the PLA is at most 60%.

In some embodiment, the PLA used in layer B is in the form of particles with an average particle size between 20 µm and 2000 µm, for example between 50 and 1000 µm is preferred and preferably is the average particle size of between 100 and 800 µm. In the present invention, by particles one understands "grains", which can be spherical, and/or ovoid forms, or can be of any other shapes or forms. The size corresponds to the longest dimension of these particles. The PLA for use in layer B can be in the form of micropellets or powders. The particles of PLA can be also obtained by grinding/milling pellets of PLA whose dimension is higher than 2000 µm, for example pellets whose dimension lies between 4000 µm and 5000 µm. In this case, the grinding of PLA pellets can be carried out by various types of grinders, such as for example a grinder with a disc, a mill, or an electromagnetic grinder, for example with a piston. Grinding can be done at room temperature or cryogenically, i.e. carried out at a temperature ranging between - 10 and -200°C, preferentially between -20 and -100°C. Cryogenic grinding also makes it possible to produce a powder without filaments, this being particularly adapted to the rotomoulding application. Grinding can be carried out under inert atmosphere, i.e. in the absence of oxygen; for example under nitrogen. In the present invention, one defines the PLA whose average particle size lies between 20 µm and 2000 µm which was obtained from grinding PLA pellets with initial dimensions greater than 2000 µm "PLA powder". The PLA can be either in the form of powder, or in the form of micropellets, or in the form of a mixture of powder and micropellets.

The PLA can be used as such without the addition of other compounds or can be mixed with various compounds, loads, agents and/or additives. Many methods of mixing PLA with such additives can be used: mixing the additives with PLA in the melt or adding the additives directly to the mould with the PLA. They can also be mixed with the powder after grinding before introduction into the rotational mould. They can also be introduced into the PLA still in the molten state obtained directly after polymerization. Some of these additives can even be added during the polymerization of the PLA. One can also consider the addition of these additives to PLA pellets having a dimension higher than 2.000 µm before grinding. The powder and micropellets of PLA can thus include antioxidants, and light and heat stabilizers, as well as anti-UV agents such as 2-(2-Hydroxy-5-tert-octylphenyl) benzotriazole commercially available under the name CYASORB® UV-5411 Light Absorber from Cytec. For example, suitable antioxidants include compounds containing phenol functional groups. One can use antioxidants called "primaries" such as compounds 1,3,5-TRIS(4-tert-butyl-3-hydroxy-2,6-dimethylbenzyl)-1,3,5-triazine-2,4,6-(1H,3H,5H)-trione, commercially available under the name Cyanox® 1790 from Cytec. One can also use antioxidants called "secondaries" such as compounds containing phosphite functional groups such as Ultranox® 626 from Chemtura, or Irgafos® 168 from BASF. When one of these additives is present, its concentration in the PLA preferably lies between 0.05 % by weight and 5 % by weight.

Fillers, impact resistance modifiers and other additives can also be included. Fillers are preferentially selected from the group of fibrous compositions such as glass fibers, metal fibers, carbon fibers, minerals such as clays, kaolin, or nanoparticles such as carbon nanotubes, and powders such as talc.

Other additives which can be used include but are not limited to, for example, fire retardants, lubricants, plasticizers, anti-static agents, pigments, dyes, surfactants. Among plasticizers, one can in particular select those of the family of citrates, in particular citrate esters like citrate of terbutylene (TBC) or butyrate esters like tri-ethylene glycol di 2-ethyl hexylbutyrate or their mixtures. Preferably, TBC is used.

The polyester, in particular PLA, can then be blended either in dry form or in the melt with the optional polyolefin, to create the composition required for layer B.

In another embodiment of layer B, the PLA, optional polyolefin and optional co- or ter-polymer are compounded together according to any known compounding method in the art, e.g. mixer, like a Banbury mixer, or an extruder, preferably a twin screw extruder. The extrusion is generally carried out at a temperature below 230°C.

### 2.2 Optional polyolefin composition of layer B

The optional polyolefin composition of layer B comprises at least one polyolefin, preferably said at least one polyolefin is polyethylene.

The at least one polyolefin is optionally present in layer B preferably in an amount ranging from 0.0 % by weight based on the total weight of layer B up to 60 % by weight, for example from at least 0.0.1% by weight based on the total weight of layer B, for example at least 0.5 % by weight, for example at least 1 % by weight, for example at least 2 % by weight, for example at least 5 % by weight, for example at least 10 % by weight, for example at least 15 % by weight, for example at least 20 % by weight of layer B, for example at least 25 % by weight, for example at least 30 % by weight, for example at least 35 % by weight, for example at least 40 % by weight, for example at least 45 % by weight, for example at least 50 % by weight, for example at least 55 % by weight, up to 60 % by weight of layer B. In certain embodiments, the polyolefin is present in an amount ranging from 0.1 to 50% by weight of layer B, more particularly from 0.1 to 25 % by weight of layer B, most particularly from 1 to 20 % by weight of layer B. However, it is also envisaged that in certain embodiments, layer B does not comprise a polyolefin.

The polyolefin can be selected from polyethylene, polypropylene, polybutene or polyhexene.

Preferably, the polyolefin is polyethylene. With polyethylene herein it is meant a polyethylene comprising at least 50 % by weight of ethylene monomers. The polyethylene may comprise up to 50 % by weight of alpha-olefin comonomers selected from alpha-olefins having from 3 to 12 carbon atoms. Preferably, the comonomer is selected from propylene, n-butene, iso-butene, n-pentene, iso-pentene, n-butene or iso-butene.

The polyethylene can be prepared with a Ziegler-Natta catalyst or a single-site catalyst, such as a metallocene, according to any known polymerization process in the art.

Preferably, the polyethylene is prepared with a single-site catalyst, in particular with a metallocene catalyst. This induces a narrow molecular weight distribution, regular comonomer insertion, and uniform comonomer distribution. Preferably, the polyethylene has a narrow molecular weight distribution of from 1 to 5 (measured by GPC). Preferably the polyethylene has a narrow comonomer distribution index (CDBI) i.e. of at least 50%, preferably at least 60%, more preferably at least 75%, measured by TREF (temperature rising elusion fractionation). Any metallocene known in the art can be used to prepare the polyethylene. In one embodiment, the metallocene can be an unbridged metallocene, for example, selected from the group comprising bis(iso-butylcyclopentadienyl) zirconium dichloride, bis(pentamethylcyclopentadienyl) zirconium dichloride, bis(tetrahydroindenyl) zirconium dichloride, bis(indenyl) zirconium dichloride, bis(1,3-dimethylcyclopentadienyl) zirconium dichloride, bis(methylcyclopentadienyl) zirconium dichloride, bis(n-butylcyclopentadienyl) zirconium dichloride, and bis(cyclopentadienyl) zirconium dichloride; and preferably selected from the group comprising bis(cyclopentadienyl) zirconium dichloride, bis(tetrahydroindenyl) zirconium dichloride, bis(indenyl) zirconium dichloride, and bis(1-methyl-3-butyl-cyclopentadienyl)zirconium dichloride. In another embodiment, the metallocene can be a bridged metallocene, for example, selected from the group comprising ethylene bis(4,5,6,7-tetrahydro-1-indenyl) zirconium dichloride, ethylene bis(1-indenyl) zirconium dichloride, dimethylsilylene bis(2-methyl-4-phenyl-inden-1-yl) zirconium dichloride, dimethylsilylene bis(2-methyl-1H-cyclopenta[a]naphthalen-3-yl) zirconium dichloride, cyclohexylmethylsilylene bis[4-(4-tert-butylphenyl)-2-methyl-inden-1-yl] zirconium dichloride, dimethylsilylene bis[4-(4-tert-butylphenyl)-2-(cyclohexylmethyl)inden-1-yl] zirconium dichloride. Bridged bis(tetrahydroindenyl) metallocenes are preferred, in particular ethylene bis(4,5,6,7-tetrahydro-1-indenyl) zirconium dichloride.

The polyethylene preferably has a density of at least 0.900 g/cm³, more preferably at least 0.910 g/cm³, even more preferably of at least 0.920 g/cm³ and most preferably of at least 0.930 g/cm³. In an embodiment, the polyethylene has a density of at most 0.965 g/cm. Most preferably, the polyethylene has a density of at least 0.932 to 0.965 g/cm³. The density is measured following the method of standard test ISO 1183 at 23°C.

The polyethylene preferably has a melt index MI2 of at least 1 dg/min, preferably of at least 1.5 dg/min, more preferably of at least 2 dg/min. It is preferably at most 25 dg/min, more preferably at most 20 dg/min. Most preferably, the polyethylene has an MI2 of at least 1 dg/min to at most 10 dg/min. The melt flow index MI2 is measured following the method of standard test ISO 1133 condition D at a temperature of 190°C and a load of 2.16 kg.

Most preferably, the polyolefin used in layer B is a polyethylene prepared in the presence of an ethylene bis(4,5,6,7-tetrahydro-1-indenyl) zirconium dichloride metallocene catalyst, wherein the polyethylene has a density of 0.930 to 0.965 g/cm³ and a melt index MI2 of 1 to 10 dg/min.

The polyolefin of layer B may contain additives, in particular additives suitable for rotational moulding, such as, by way of example, processing aids, mould-release agents, anti-slip agents, primary and secondary antioxidants, light stabilizers, anti-UV agents, acid scavengers, flame retardants, fillers, nanocomposites, lubricants, antistatic additives, nucleating/clarifying agents, antibacterial agents, plasticizers, colorants/pigments/dyes and mixtures thereof. Preferably the polyolefin comprises an anti-UV agent. Illustrative pigments or colorants include titanium dioxide, carbon black, cobalt aluminum oxides such as cobalt blue, and chromium oxides such as chromium oxide green. Pigments such as ultramarine blue, phthalocyanine blue and iron oxide red are also suitable. Specific examples of additives include lubricants and mould-release agents such as calcium stearate, zinc stearate, SHT, antioxidants such as Irgafos 168™, Irganox 1010™, and Irganox 1076™, anti-slip agents such as erucamide, light stabilizers such as Cyasorb THT 4611 and 4802, tinuvin 622™ and tinuvin 326™, and nucleating agents such as Milliken HPN20E™, or Milliken Hyperform® HPR-803i.

An overview of the additives that can be used in the moulded articles of the present invention may be found in Plastics Additives Handbook, ed. H. Zweifel, 5th edition, 2001, Hanser Publishers.

In a preferred embodiment of layer B, the PLA, optional polyolefin and optional co- or ter-polymer are compounded together according to any known compounding method in the art, e.g. mixer, like a Banbury mixer, or an extruder, like a twin screw extruder. The extrusion is generally carried out at a temperature below 230°C.

### 2.3 The optional additive selected from compatibilizing agent and/or impact modifier of layer B (e.g. Co- or Ter-polymer)

In an embodiment, layer B comprises from 0 to 20% by weight based on the total weight of layer B of at least one additive selected from compatibilizing agent and/or impact modifier. Preferably the compatibilizing agent and/or impact modifier is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer.

When present, the co- or ter-polymer acts as a compatibilizer between the polyester and the polyolefin. It also acts as a chain modifier. If present, the co-or ter-polymer is preferably present from 0.1 to 20 % by weight, more preferably from 0.1 to 15 % by weight, even more preferably from 0.5 to 10 % by weight, most preferably from 1 to 5 % by weight based on total weight of layer B.

Preferably, the optional co- or ter-polymer comprises:
(a) 50 to 99.9 % by weight of ethylene or styrene monomer,
(b) 0.1 to 50 % by weight, preferably 1 to 50 % by weight, of an unsaturated anhydride containing monomer, unsaturated epoxide containing monomer or unsaturated carboxylic acid containing monomer,
(c) 0 to 50 % by weight of a (meth)acrylic ester monomer, preferably from 0.1 to 50 % by weight of a (meth)acrylic ester monomer;
the sum of the weight percentages relating to the abovementioned compounds of said co- or ter-polymer being equal to 100 %.

Preferably, the rotomoulded article comprises:
(i) at least one layer A comprising fibers embedded in a composition comprising at least one vinyl ester resin; and
(ii) at least one layer B comprising:
   - from 40 to 100 %, preferably from 75 to 100 % by weight relative to the total weight of said layer B of at least one thermoplastic polyester;
   - from 0 to 60 % by weight relative to the total weight of said layer B of a polyolefin composition; said composition comprising at least one polyolefin, preferably said at least one polyolefin is polyethylene; and
   - from 0 to 20 % by weight relative to the total weight of said layer B of at least one additive selected from compatibilizing agent and/or impact modifier; wherein said additive (compatibilizing agent and/or impact modifier) is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer;
   wherein at least one layer A is in contact with one layer B.

Preferably, the rotomoulded article comprises:
(i) at least one layer A comprising fibers embedded in a composition comprising at least one vinyl ester resin; and
(ii) at least one layer B comprising:
   - from 40 to 100 %, preferably from 75 to 100 % by weight relative to the total weight of said layer B of at least one thermoplastic polyester;
   - from 0 to 60 % by weight relative to the total weight of said layer B of a polyolefin composition; said composition comprising at least one polyolefin, preferably said at least one polyolefin is polyethylene; and
   - from 0 to 20 % by weight relative to the total weight of said layer B of at least one additive selected from compatibilizing agent and/or impact modifier; wherein said additive is at least one co- or ter-polymer comprising (a) 50 to 99.9 % by weight of ethylene or styrene monomer, (b) 0.1 to 50 % by weight, preferably 1 to 50 % by weight, of an unsaturated anhydride containing monomer, unsaturated epoxide containing monomer or unsaturated carboxylic acid containing monomer, and (c) 0 to 50 % by weight of a (meth)acrylic ester monomer, preferably from 0.1 to 50 % by weight of a (meth)acrylic ester monomer;
   wherein at least one layer A is in contact with one layer B.

In all embodiments of the co- or ter-polymer, the ethylene or styrene monomer (a) is present from 50 to 99.9 % by weight, preferably from 50 to 99.8 % by weight, more preferably from 60 to 99.5 % by weight, even more preferably from 65 to 99 % by weight, most preferably from 70 to 98 % by weight. In an embodiment of the copolymer, the ethylene or styrene monomer is present from 90 to 98 wt.%.

In all embodiments of the co- or ter-polymer, the unsaturated monomer (b) is preferably selected from an unsaturated anhydride- or epoxide-containing monomer. More preferably, the unsaturated monomer (b) is selected from a glycidyl (meth)acrylate or maleic anhydride. The unsaturated monomer (b) is preferably present from 0.1 to 40 % by weight, more preferably from 0.2 to 30 % by weight, even more preferably from 0.3 to 20 % by weight, yet even more preferably from 0.3 to 15 % by weight and most preferably from 0.3 to 10 % by weight of the co-or ter-polymer.

The (meth)acrylic ester monomer (c), if present, is preferably selected from those acrylates which have between 1 and 10 carbon atoms such as for example methyl (meth)acrylate, ethyl (meth)acrylate, n-butyl (meth)acrylate, iso-butyl (meth)acrylate, 2-ethylhexyl (meth)acrylate, or n-octyl (meth)acrylate. If present, it preferably makes up 0.1 to 50 % by weight of the terpolymer, preferably 0.5 to 40 % by weight, more preferably 1 to 30 % by weight, even more preferably 2 to 25 % by weight and most preferably 5 to 25 % by weight of the terpolymer.

The co-polymers of ethylene or styrene monomer and of a glycidyl (meth)acrylate or maleic anhydride can contain from 50 to 99 % by weight of ethylene or styrene monomer and from 1 to 50 % by weight of a glycidyl (meth)acrylate or maleic anhydride, preferably from 90 to 98 % by weight of ethylene or styrene monomer and from 2 to 10 % by weight of a glycidyl (meth)acrylate or maleic anhydride, based on the total weight of the co- or ter-polymer.

The ter-polymers of ethylene or styrene monomer, of a glycidyl (meth)acrylate or maleic anhydride and of a (meth)acrylic ester monomer can contain from 50 to 98.8 % by weight of ethylene or styrene monomer, from 0.2 to 10 % by weight of a glycidyl (meth)acrylate or maleic anhydride and from 1 to 50 % by weight of a (meth)acrylic ester monomer e.g. methyl acrylate, based on the total weight of the ter-polymer. Preferably the terpolymer can contain from 55 to 97.7 % by weight of ethylene or styrene monomer, from 0.3 to 8% of a glycidyl (meth)acrylate or maleic anhydride, and from 2 to 35% of (meth)acrylic ester monomer, based on the total weight of the ter-polymer.

Still more preferably, the co- or ter-polymer is selected among copolymers of ethylene and glycidyl methacrylate and terpolymers of ethylene or styrene, acrylic ester monomers and glycidyl methacrylate or maleic anhydride. Preferably, at least one additive selected from compatibilizing agent and/or impact modifier of layer C and/or layer B is at least one co- or ter-polymer is selected from the group comprising copolymers of ethylene and glycidyl methacrylate; terpolymers of ethylene, acrylic ester monomers, and glycidyl methacrylate; terpolymers of styrene, acrylic ester monomers, and glycidyl methacrylate; terpolymers of ethylene, acrylic ester monomers, and maleic anhydride; terpolymers of styrene, acrylic ester monomers, and maleic anhydride; and any combination thereof; preferably, the compatibilizing agent is a copolymer of ethylene and glycidyl methacrylate. Preferred co- or terpolymer can be selected from the copolymer of ethylene and glycidyl methacrylate sold under the trademark Lotader®AX 8840 by Arkema France, the terpolymer of ethylene, ethylacrylate and maleic anhydride sold under the denomination Lotader ®4700 by Arkema France, ther terpolymer of ethylene monomer, glycidyl methacrylate and methyl acrylate sold under the denomination Lotader®AX8900 by Arkema France (68 % by weight of ethylene monomer, 8 % by weight of glycidyl methacrylate and 24 % by weight methyl acrylate); as well as the terpolymer of styrene monomer, acrylic esters and glycidyl methacrylate sold under the trademark Joncryl® by BASF. The co- or terpolymer, is then blended either in dry form or in the melt with the polyolefin, in particular a polyethylene, and the polyester, in particular PLA, to create the composition required for layer B.

The co- or terpolymer and the polyester can be added one by one to the polyolefin and mixed after each addition or they can be added together and mixed together once.

In a preferred embodiment of layer B, the PLA, polyolefin and the compatibilizing agent and/or impact modifier are compounded together according to any known compounding method in the art, e.g. mixer, like a Banbury mixer, or an extruder, preferably a twin screw extruder. The extrusion is generally carried out at a temperature below 230°C.

The composition for layer B can be in powder or micropellet form suitable for rotational moulding.

### 3. Optional layer C

In addition to layer A and layer B as described above, the rotomoulded article described herein may comprise one or more further layers C. Preferably at least one layer C is contacting one layer B. In an embodiment, the rotomoulded article further comprises at least one layer C comprising:
- from 50 to 99.4 % by weight relative to the total weight of said layer C; preferably 60 to 99 % by weight of at least one polyolefin, which can be different from the (optional) polyolefin of layer B, preferably said at least one polyolefin is polyethylene;
- from 0.5 to 50 % by weight relative to the total weight of said layer C of at least one thermoplastic polyester, more preferably from 1 to 30 % by weight, most preferably 5 to 30 w% by weight relative to the total weight of said layer C of at least one polyester (preferably PLA), which can be different from the thermoplastic polyester of layer B,
- from 0.1 to 20 % by weight relative to the total weight of said layer C of at least one additive selected from compatibilizing agent and/or impact modifier, preferably 0.1 to 15 % by weight relative to the total weight of said layer C of at least one additive selected from compatibilizing agent and/or impact modifier, which can be different from the additive selected from compatibilizing agent and/or impact modifier of layer B,
- optionally from 0.1 to 20 % by weight relative to the total weight of said layer C of at least one ionomer;
and wherein at least one layer C is contacting one layer B.

In some embodiments, when layer C is adjacent to layer B, preferably in contact with layer B, then layer B is positioned between a layer A as described herein and a layer C.

In particular embodiments, layer C has an average thickness ranging between 0.5 mm and 10 mm. When foamed, layer C typically has an average thickness ranging between 5 mm to 100 mm.

### 3.1. Polyolefin of layer C

The at least one polyolefin can be present from in an amount ranging from 50% by weight, for example from 60% by weight, for example from 70% by weight up to 99.4 % by weight based on the total weight of layer C.

The polyolefin can be the same as or different from the polyolefin optionally present in layer B. The polyolefin can be selected from polyethylene, polypropylene, polybutene or polyhexene. Preferably, the polyolefin is polyethylene. The description of polyethylene present in layer B applies *mutatis mutandis* to the polyethylene in layer C, which can be the same as or different from any polyethylene present in layer B.

The composition for layer C can be in powder or micropellet form, suitable for moulding, preferably rotational moulding. When optional chemical blowing agent is present and micropellets are used, the polyolefin and chemical blowing agent are preferably compounded together instead of dry blended.

### 3.2. The Polyester

In a preferred embodiment the at least one polyester of layer C is a thermoplastic polyester as described for layer B. The description of the polyester (section 2.1 above) present in layer B applies *mutatis mutandis* to layer C. The polyester (preferably PLA) can be the same as or different from the one present in layer B. In particular embodiments, layer C comprises from 5 to 30 % by weight PLA, based on the total weight of layer C. Preferably the at least one thermoplastic polyester in layer C is selected from the group comprising poly(lactic acid), polyhydroxyalkanoate, polycaprolactone, copolyesters, polyesteramides, copolymer of polylactic acid, (e.g. such as copolymer of lactic acid and trimethylene carbonate, lactic acid and urethane), and any combination thereof, preferably said at least one thermoplastic polyester in layer C is a poly(lactic acid).

### 3.3 The additive selected from compatibilizing agent and/or impact modifier of layer C (e.g. co- or ter-polymer)

In a preferred embodiment the at least one at least one additive selected from compatibilizing agent and/or impact modifier of layer C is at least one co- or ter-polymer as described for layer B. The description of the compatibilizing agent and/or additive (section 2.3 above) present in layer B applies *mutatis mutandis* to layer C.

Preferably, layer C comprises:
- from 50 to 99.4 % by weight relative to the total weight of said layer C; preferably 60 to 99 % by weight of at least one polyolefin, which can be different from the (optional) polyolefin of layer B, preferably said at least one polyolefin is polyethylene;
- from 0.5 to 50 % by weight relative to the total weight of said layer C of at least one thermoplastic polyester, more preferably from 1 to 30 % by weight, most preferably 5 to 30 w% by weight relative to the total weight of said layer C of at least one polyester (preferably PLA), which can be different from the thermoplastic polyester of layer B,
- from 0.1 to 20 % by weight relative to the total weight of said layer C of at least one additive selected from compatibilizing agent and/or impact modifier, preferably 0.1 to 15 % by weight relative to the total weight of said layer C of at least one additive selected from compatibilizing agent and/or impact modifier, which can be different from the additive selected from compatibilizing agent and/or impact modifier of layer B, wherein said additive (compatibilizing agent and/or impact modifier) is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer;
- optionally from 0.1 to 20 % by weight relative to the total weight of said layer C of at least one ionomer;
and wherein at least one layer C is contacting one layer B.

Preferably, said at least one additive selected from compatibilizing agent and/or impact modifier of layer C is at least one co- or ter-polymer comprising:
(a) 50 to 99.9 % by weight of ethylene or styrene monomer,
(b) 0.1 to 50 % by weight of an unsaturated anhydride containing monomer, unsaturated epoxide containing monomer or unsaturated carboxylic acid containing monomer,
(c) 0 to 50 % by weight of a (meth)acrylic ester monomer, preferably from 0.1 to 50 % by weight of a (meth)acrylic ester monomer.

Preferably, the at least one co- or ter-polymer is selected from the group comprising copolymers of ethylene and glycidyl methacrylate; terpolymers of ethylene, (meth)acrylic ester monomers, and glycidyl methacrylate; terpolymers of styrene, (meth)acrylic ester monomers, and glycidyl methacrylate; terpolymers of ethylene, (meth)acrylic ester monomers, and maleic anhydride; terpolymers of styrene, (meth)acrylic ester monomers, and maleic anhydride; and any combination thereof; preferably, the at least one additive selected from compatibilizing agent and/or impact modifier is a co- or ter-polymer of ethylene and glycidyl methacrylate and optionally (meth)acrylic ester monomer (such as methyl acrylate, ethylacrylate, butylacrylate) and combinations thereof.

The co- or ter-polymer acts as a compatibilizer between the polyester and the polyolefin. It also acts as a chain modifier. It can also act as impact modifier.

The co-or ter-polymer is preferably present in layer C in an amount of at least 0.1 % by weight, preferably in an amount ranging from 0.1 to 20 % by weight, more preferably from 0.1 to 15 % by weight, even more preferably from 0.5 to 10 % by weight, most preferably from 1 to 5 % by weight based on the total weight of layer C.

Preferably, said at least one additive selected from compatibilizing agent and/or impact modifier of layer C comprises at least 0.1 % by weight of ter-polymer, said ter-polymer comprising 50 to 99.8 % by weight of ethylene monomer, 0.1 to 50 % by weight of glycidyl methacrylate, 0.1 to 50 % by weight of methyl acrylate.

The co- or terpolymer, can be blended either in dry form or in the melt with the polyolefin, in particular a polyethylene, and the polyester, in particular PLA, to create the composition required for layer C.

The co- or terpolymer and the polyester can be added one by one to the polyolefin and mixed after each addition or they can be added together and mixed together once.

### 3.4 The optionally ionomer

Optionally, layer C of the article described herein can comprise one or more ionomers, for example in a concentration ranging from 0.1 to 20 % by weight based on the total weight of layer C.

Suitable ionomers include polyelectrolyte that comprises copolymers containing both electrically neutral repeating units and a fraction of ionized or ionizable units, usually representing at most 15 % by weight of the copolymer. They link in such a way that, even though they are stiff at room temperature, the bonds may be broken down thermally and the new linkages will cause the material to act as though it were a thermoplastic material.

The optimal amount of ionomer may depend on the type of polyolefin, polyester, and ionomer used for layer C. In particular embodiments, layer C can comprise from 0.2 to 10 % by weight of ionomer(s), more particularly from 0.5 to 7 % by weight relative to the total weight of said layer C.

In particular embodiments, the ionomer can be:
- a copolymer comprising one or more olefin monomers (such as ethylene, propylene, 1-butene, etc.) or styrene monomers (such as styrene, 2-methylstyrene, 3-methylstyrene, etc.), and one or more monomers comprising a functional group selected from the group comprising carboxylate, sulfonate, and a carboxylic acid anhydride; or
- a grafted polyolefin or polystyrene comprising one or more functional groups selected from the group comprising carboxylate, sulfonate, a carboxylic acid anhydride, phosphonate, and phosphinate; preferably carboxylate, sulfonate, or a carboxylic acid anhydride, most preferably carboxylate.

Suitable ionomers can be prepared by methods well known in the art such as, for example, as described in US patents 3,264,272, 3,404,134, and 3,355,319, each of which is hereby incorporated by reference.

Suitable commercially available ionomers include, but are not limited to, those known under the tradenames of Surlyn® (DuPont), EEA Copolymer (ethylene-ethyl acrylate copolymer), Hycar® (Goodrich), lotek® (ExxonMobil), Priex® (Solvay Engineered Polymers), AClyn® (Honeywell International), Nafion® (DuPont), and Thionic® (Uniroyal).

### 3.5 The optionally foamed layer C - chemical blowing agents

Optionally, and layer C can be a foamed polyolefin layer. In order to foam polyolefin a chemical blowing agent can be included into layer C, which causes the polyolefin to foam under the appropriate conditions in the presence of a blowing gas in the mould during rotational moulding. During the foaming process, at elevated temperatures, chemical blowing agents undergo chemical reactions that liberate gas, typically N₂, CO, CO₂ and NH₃ and water.

Suitable chemical blowing agents include:

### Organic chemical blowing agents:

Azo compounds such as for example azodicarbonamide decompose at a temperature range of from 160 to 215 °C and liberate about 220 ml/g of gas, mostly N₂, CO, CO₂, NH₃ and water.

Hydrazides such as for example or 4,4'-oxy-bis(benzenesulfonylhydrazide) (from example Genitron®OB from LANXESS). It decomposes at a temperature range of from 140 to 160 °C and liberates 120 to 140 ml/g of gas, mostly N₂ and H₂O. This type of agent is particularly preferred as it is exothermic and releases only neutral gases.

Other examples include modified azodicarbonamide, i.e., azodicarbonamide modified with zinc oxide, calcium carbonate or the like to lower the decomposition temperature, 5-phenyltetrazole, dinitrosopentamethylene tetramine, azobisisobutyronitrile, diazoaminobenzene, oxybis(benzenesulfonylhydrazide) and the like.

### Inorganic chemical blowing agents:

Carbonates such as for example sodium bicarbonate NaHCO₃. It decomposes at a temperature range of from 150 to 230 °C and liberates 140 to 230 ml/g of gas, mostly CO₂ and H₂O.

Other examples include sodium borohydride, ammonium carbonate, and modified sodium bicarbonate, i.e. sodium bicarbonate modified with a proton donor such as citric acid, and the like.

In some embodiments, the amount of blowing agent added to the polyolefin is of at least 0.2 % by weight based on the total weight of layer B, preferably of at least 1 % by weight. It can be of at most 5 % by weight, preferably of at most 3 % by weight. In some embodiments, preferred amount is of about 2.5 % by weight. The chemical blowing agent totally decomposes upon foaming.

### 3.6 Preparing the optionally foamed polyolefin layer C

The foamed polyolefin layer can be prepared by standard techniques with one or more chemical blowing agent(s). The chemical blowing agent can be incorporated into the polyolefin to form a blend. The blend may be prepared by extruding the polyolefin either with a masterbatch comprising the chemical blowing agent or directly with the blowing agent. In both cases, it is preferred that the extrusion temperature is kept above the melt temperature of the polyolefin but below the decomposition temperature range of the chemical blowing agent(s). The melt can then be passed through a suitable die, such as used with a pelletizer, to obtain the pelletized resin.

Alternatively, and preferably, the polyolefin can be dry blended with the chemical blowing agent(s) and introduced directly into the mould during the rotomoulding cycle. Dry blending is favored over compounding the chemical blowing agent with the polyolefin, because the mixing has to be carried out below the decomposition temperature of the chemical blowing agent. While it is not necessary, additives which function to control or modify foam cell size or foam density or modify/control the activator temperature or rate of decomposition of the chemical blowing agent may also be included in the polyolefin. Useful additives of this type include calcium carbonate, titanium dioxide, zinc oxide, talc, calcium stearate, nanocomposites and the like. When present, the amount of these additives typically ranges from about 0.01 % by weight to about 1 % by weight (percent by weight), based on the weight of the foamed polyolefin layer. The preferred density of the foamed layer is between 100 to 200 kg/m³.

The preferred thickness of the foamed layer can be ranging from 5 to 500 mm, preferably from 10 to 200 mm, according to the desired use of the rotomoulded article.

### 4 Optional Layer D

In particular embodiments, the rotomoulded article described herein may comprise one or more further layers D, in addition to the layer(s) A, layer(s) B and (optional) layer(s) C described above. Preferably, layer D comprises a polyolefin. Layer D is preferably adjacent to layer C. In a particular embodiment, layer D is adjacent to layer C, which is adjacent to layer B, which is adjacent to a layer A. In some embodiments, at least one layer A is preferably an outer layer, layers B and C intermediate layers and layer D an inner layer.

In particular embodiments, layer D has an average thickness ranging between 50µm and 5mm.

### 4.1 Polyolefin

Layer D can comprise at least one polyolefin. The polyolefin can be preferably present in an amount ranging from 50% by weight based on the total weight of layer D, for example ranging from 60% by weight, for example ranging from 70% by weight, for example ranging from 80% by weight, for example ranging from 90% by weight, for example ranging from 95% by weight, up to 100 % by weight of layer D, or up to 100% for example up to 99.8% by weight, for example up to 99% by weight, for example up to 97.5% by weight, for example up to 97% by weight, or for example up to 95% by weight % by weight of layer D. Preferably, layer D comprises from 50 to 100 % by weight of at least one polyolefin.

The polyolefin can be the same as or different form the polyolefin present in layer C.

The polyolefin can be selected from polyethylene, polypropylene, polybutene or polyhexene. Preferably, the polyolefin is polyethylene. The description of polyethylene optionally present in layer B applies *mutatis mutandis* to the polyethylene in layer D, which can be the same as or different from any polyethylene present in layer B.

The composition for layer D can be in powder or micropellet form, suitable for moulding.

### 4.2 Further optional components

In another embodiment, particularly when layer D is the inner layer, layer D may also comprise other components besides the polyolefin. For example, it may comprise:
- from 50 to 100 % by weight, preferably 60 to 99.4 % by weight, of the at least one polyolefin, which can be different from the polyolefin of layer B,
- from 0 to 50 % by weight, preferably 0.5 to 50 % by weight, more preferably 0.5 to 30 % by weight, of at least one polyester (preferably PLA), which can be different from the thermoplastic polyester of layer B,
- from 0 to 20 % by weight, preferably 0.1 to 15 % by weight, of at least one at least one additive selected from compatibilizing agent and/or impact modifier, preferably co- or ter-polymer, which can be different from the co- or ter-polymer of layer;
the sum of the percentages relating to the abovementioned compounds of layer D being equal to 100 %.

Preferably, the rotomoulded article comprises:
(i) at least one layer A comprising fibers embedded in a composition comprising at least one vinyl ester resin; and
(ii) at least one layer B comprising:
   - from 40 to 100 %, preferably from 75 to 100 % by weight relative to the total weight of said layer B of at least one thermoplastic polyester;
   - from 0 to 60 % by weight relative to the total weight of said layer B of a polyolefin composition; said composition comprising at least one polyolefin, preferably said at least one polyolefin is polyethylene; and
   - from 0 to 20 % by weight relative to the total weight of said layer B of at least one additive selected from compatibilizing agent and/or impact modifier; preferably wherein said additive (compatibilizing agent and/or impact modifier) is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer;
   wherein at least one layer A is in contact with one layer B.
(iii) optionally at least one layer C comprising:
   - from 50 to 99.4 % by weight relative to the total weight of said layer C; preferably 60 to 99 % by weight of at least one polyolefin, which can be different from the (optional) polyolefin of layer B, preferably said at least one polyolefin is polyethylene;
   - from 0.5 to 50 % by weight relative to the total weight of said layer C of at least one thermoplastic polyester, more preferably from 1 to 30 % by weight, most preferably 5 to 30 w% by weight relative to the total weight of said layer C of at least one polyester (preferably PLA), which can be different from the thermoplastic polyester of layer B,
   - from 0.1 to 20 % by weight relative to the total weight of said layer C of at least one additive selected from compatibilizing agent and/or impact modifier, preferably 0.1 to 15 % by weight relative to the total weight of said layer C of at least one additive selected from compatibilizing agent and/or impact modifier, which can be different from the additive selected from compatibilizing agent and/or impact modifier of layer B, preferably wherein said additive (compatibilizing agent and/or impact modifier) is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer;
   - optionally from 0.1 to 20 % by weight relative to the total weight of said layer C of at least one ionomer;
   and wherein if present at least one layer C is contacting one layer B.
(iv) optionally at least one layer D comprising
   - from 50 to 100 % by weight, preferably 60 to 99.4 % by weight, of the at least one polyolefin, which can be different from the polyolefin of layer B,
   - from 0 to 50 % by weight, preferably 0.5 to 50 % by weight, more preferably 0.5 to 30 % by weight, of at least one polyester (preferably PLA), which can be different from the thermoplastic polyester of layer B,
   - from 0 to 20 % by weight, preferably 0.1 to 15 % by weight, of at least one at least one additive selected from compatibilizing agent and/or impact modifier, preferably co- or ter-polymer, which can be different from the co- or ter-polymer of layer; preferably wherein said additive (compatibilizing agent and/or impact modifier) is at least one co- or ter-polymer comprising ethylene or styrene monomer; an unsaturated anhydride containing monomer, unsaturated epoxide containing monomer or unsaturated carboxylic acid containing monomer; and optionally a (meth)acrylic ester monomer;
   and wherein if present at least one layer D is contacting one layer B, or if present at least one layer C.

The description of the polyester (section 2.1 above) and the co- or ter-polymer (section 2.3 above) present in layer B applies *mutatis mutandis* to layer D. The optional polyester (preferably PLA) and the optional co- or ter-polymer can be the same as or different from those present in layer B. Layer D can be the same as or different from layer C.

### 5 The rotomoulding process

According to an embodiment, the present invention also encompasses a method for preparing a rotomoulded article, comprising the steps of
(i) providing a mould;
(ii) optionally applying to at least a part of the interior wall of said mould at least one layer A comprising fibers embedded in a composition comprising at least one vinyl ester resin;
(iii) moulding in the mould at least one layer B comprising:
   - from 40 to 100 %, preferably from 75 to 100 %, by weight relative to the total weight of said layer B of at least one thermoplastic polyester;
   - from 0 to 60 % by weight relative to the total weight of said layer B of a polyolefin composition; said composition comprising at least one polyolefin, preferably said at least one polyolefin is polyethylene; and
   - from 0 to 20 % by weight relative to the total weight of said layer B of at least one additive selected from compatibilizing agent and/or impact modifier;
   thereby obtaining a moulded layer B comprising at least one outer surface and one inner surface,
(iv) optionally applying to at least a part of the inner surface of the moulded layer B at least one layer A comprising fibers embedded in a composition comprising at least one vinyl ester resin;
(v) optionally applying to at least a part of the outer surface of the moulded layer B at least one layer A comprising fibers embedded in a composition comprising at least one vinyl ester resin;
wherein at least one of steps (ii), (iv) or (v) is not optional, and at least one layer A is contacting one layer B, thereby obtaining the article according to the invention.

The rotomoulded article according to the invention comprises at least one layer A and at least one layer B. The article can be a bi-layered article only having the layer A and layer B, or it can be a multilayered article having three, four, five or more layers. In particular embodiments, the article may comprise a further layer C, preferably adjacent to layer B. In addition, a further layer D may be present, preferably adjacent to layer C.

Rotational moulding is a process well-known to the person skilled in the art. The various processes of rotational moulding usually comprise the stages of a) loading of the mould; b) rotation of the mould; c) heating of the mould; d) cooling; and e) release from the mould.

In some embodiments, the process for manufacturing the rotomoulded articles described herein comprises, prior to loading the mould with the material required for the layer B, covering at least a part of the internal surface of the mould with one or more layers A. In case the mould interior is only partially covered with one or more layers A, the layer(s) A of the rotomoulded article typically cover only a part of the underlying layer (e.g. layer B). In particular embodiments, the mould interior is partially or completely covered with one or more layers A.

In some embodiments, the process for manufacturing the rotomoulded articles described herein comprises, loading the mould with the material required for the layer B, molding layer B and any other optional layers, and then applying on at least part of the internal surface of the molded layers at least one layer A.

In some embodiments, the process for manufacturing the rotomoulded articles described herein comprises, loading the mould with the material required for the layer B, molding layer B and any other optional layers, releasing the molded layers from the mould and then applying on at least part of the external surface of the molded layers at least one layer A.

In some embodiment, the process for manufacturing the rotomoulded articles described herein comprises, loading the mould with the material required for the layer B, molding layer B and any other optional layers, and then applying on at least part of the internal surface of the molded layers at least one layer A; releasing the molded layers from the mould and then applying on at least part of the external surface of the molded layers at least one layer A.

In certain embodiments, the laminate or stratified (layer A) may be applied to the mould for example using an automated fiber placement (AFP) machine. Alternatively, the fibers may be applied to the mould first, and subsequently impregnated with the resin composition. In particular embodiments, a non-permanent adhesive may be used to promote the adherence of the (impregnated) fibers to the mould.

The process of rotational moulding can be started by first loading in the mould the material required for layer B, typically in the form of a powder and/or micropellets. The quantity of powder and/or of micropellets introduced into the mould depends on the size of the article and on the desired wall thickness.

Once the required material is loaded in the mould, the mould can be rotated and heated. The rotation of the mould is generally carried out around two perpendicular axes. The heating step (c) of the mould typically occurs simultaneously with the rotation of the mould in step (b).

In one embodiment, the heating step can be carried out in an oven or by electric heating elements. In another preferred embodiment heating can be carried out with a mould heated by an oil-filled heating jacket, as in for example, the Leonardo® rotomoulding machine from Persico®. The heating temperature of the oven, electric heating elements or oil can vary from 150 to 350°C. One generally uses a temperature of at least of 10°C higher, preferentially at least of 20°C higher, more preferentially at least of 30°C higher compared to the melting point of the layer that one wishes to mould. A heating temperature ranging from 180 and 270°C is preferably used. In another embodiment, heating can also be carried out by microwaves.

The duration of the moulding varies according to dimensions and the thickness of rotomoulded article, and typically ranges from 5 to 600 minutes.

When layer A is first applied to the interior wall of the mould, the heating of the mould is not only useful for preparing layer B and optionally other layers, but typically at least partially induces curing of the resin composition of layer A in which the fibers are embedded. As used herein, "cure" and "curing" refers to polymerizing and/or cross-linking processes.

In some cases however, further curing of the resin composition of layer A may be required. Further curing of a partially cured resin composition typically increases the glass transition of the resin. Accordingly, in particular embodiments, the rotomoulding process described herein may comprise a dedicated curing step. In this curing step, the mould can be typically heated, with or without rotation of the mould. The duration of the curing step and the mould temperature during the curing step typically depend on the optimal curing temperature of the resin compositions, and the melting point of the other layer(s).

After completion of the layer(s) and optional curing, the mould and the article contained by the mould are typically cooled.

The duration and the time of cooling step depends on the installation, on the dimensions of the article to be moulded and of the type of article which one wishes to obtain. As mentioned previously, it is possible to cool the mould and/or the moulded layers contained in the mould. To cool the mould from the outside, one can use air at room temperature, water between 5 and 25°C or oil between 5 and 80°C. To cool the article from the inside of the mould, one can inject air and/or inert gas such as nitrogen and/or spray water (like a mist) within the interior of the mould, for example at a temperature of 25°C. The time of cooling generally varies between 5 and 500 minutes depending on the thickness of the rotomoulded article and the process used for cooling. When the article has a thickness of more than 10 mm, the mould should preferably be cooled from both the inside of the mould and the outside, preferably using air or inert gas such as nitrogen or a spray of water (mist).

According to a mode of realization, the cooling of the mould and/or the moulded layers obtained are done in just one step until a temperature ranging between room temperature and a temperature lower than 100°C is obtained. Thereafter, the moulded layers are released from the mould. Release of the layers from the mould is generally carried out when the layers has sufficient rigidity. The release from the mould is generally done at a temperature lower than 100°C.

According to a particular mode of realization, the cooling of the mould and/or article comprises the following steps:
i. cooling until a temperature ranging between 100°C and 150°C, preferably between 100°C and 130°C, is reached,
ii. maintaining this temperature for 0 to 60 minutes,
iii. cooling again until a temperature ranging between the room temperature and a temperature lower than 100°C is reached.

Thereafter, the moulded layers are released from the mould.

In certain embodiments, layer A may be applied to the moulded layers once released from the mould for example using an automated fiber placement (AFP) machine. Alternatively, the fibers may be applied to the moulded layers first, and subsequently impregnated with the resin composition of layer A. In particular embodiments, a non-permanent adhesive may be used to promote the adherence of the (impregnated) fibers to the mould.

In some embodiments, layer A may be applied on the inner surface of the rotomoulded layers using centrifugation. The resin composition and the fibers can be introduced in the moulded article which is then rotated around its longitudinal axis. The fibers and the resin composition are then applied against the inner surface of the moulded article using centrifugal forces.

The rotational moulding can be carried out under inert gas in the absence of oxygen. In order to do so, one can for example add into the mould a compound which liberates carbon dioxide, such as dry ice. This can be for example together with the powder or pellets of the different components. Dry ice generates carbon dioxide during the heating and rotating steps of the moulding process. One can also purge the mould with an inert gas, such as nitrogen, by injecting nitrogen after closing the mould.

The walls of the articles can comprise one or more successive layers, at least having layers A and B as claimed. It is thus possible to manufacture articles with walls comprising for examples two or three layers e.g. optionally having a layer C and layer D. In one embodiment, layer C can be foamed.

In a particular embodiment, layer A is the outer layer, layers B and C are intermediate layers and layer D is the inner layer. In this particular embodiment, layer D may further comprise a polyester and optionally at least one additive selected from compatibilizing agent and/or impact modifier according to the same definitions as in layer B. Layer D can be same as or different from layer B.

There are several known methods to manufacture multilayered rotomoulded articles: by manual introduction of material during the rotomoulding cycle, or by the use of a drop-box, or by a one-shot system wherein each layer has a different melting temperature and are introduced into the mould together.

Manual addition involves moving the mould from the oven, removing a vent tube or plug that creates an opening in the part and adding more material using a funnel or wand. This operation must be repeated for each additional layer.

A drop-box typically contains the material for a particular layer and it is an insulated container that holds material until it is released at the appropriate time during the cycle. The signal for release of material is usually transmitted as a pressure pulse via the airline through the arm of the machine. The insulation is kept cool to prevent the material inside the box from melting.

In either of these two methods, there are two factors to consider, which are in fact known to the skilled person in multilayered rotomoulding applications:
- the temperature at which the subsequent layer is added for determining the wall thickness of the previous skin formed and how well the two layers may be bound together;
- the time elapsed before addition of the subsequent layer of material to avoid sag.

It is possible to control these by lowering the melt index of the first layer and/or by reducing the injection temperature of the next layer, and/or by cooling the mould slightly before injection of the next layer.

The cycle time necessary to produce multilayer rotomoulded articles depends upon the number of layers and upon the mass injected for each layer.

The time at which the temperature inside the mould reaches the melting temperature of the composition for layer B, can be used to determine the injection point of layer C. Composition for layer C (if adjacent to layer B) comprising polyolefin (and optionally a chemical blowing agent) is injected as soon as or just before that first melting temperature is reached. The composition for layer C is preferably injected at an internal air temperature situated between 125 and 160°C. The time at which the temperature inside the mould reaches the melting temperature of composition for layer C, can be used to determine the injection point of layer D. Composition for layer D is injected as soon as or just before that second melting temperature is reached. The composition for layer D is injected at an internal air temperature situated between 125 and 160°C. The internal air temperature must be compatible with the temperature and is preferably of at most 170°C during the whole cycle time.

The articles obtained by rotational moulding are generally hollow parts without any welding lines, such as for example structural parts, tanks, drums, containers, vats, jerrycans, cans, cisterns, boxes, bumpers, furniture (bath tubs), car parts such as car doors, car bodies and car seats, nautical and aquatic equipment, buoys, floats, airplane parts, boards, planks and joints.

The rotomoulded article can have one or more openings and/or inserts of plastic or metal and/or "kiss offs" which are reinforcing junctions or bridges between two surfaces within the article. In some embodiment, the rotomoulded article comprises one or more openings and/or inserts of plastic or metal and/or "kiss offs" which can be protruding through at least layer A.

Articles obtained by the rotational moulding process according to the invention typically do not have a point of weakness. They show homogeneous characteristics, such as for example a uniform thickness of the walls as well as good surface aspects both internally and externally, without any deformation, bubble or other defects. In addition, the compositions for use in the present process do not present any sagging behavior during the rotomoulding process.

In particular, the articles obtained have a very little shrinkage and warpage. The presence of layer A and the (optional) presence of the co- or terpolymer (compatibilizing agent) in layer B increases the impact strength of the article.

### 6 Filling with polyurethane

The articles obtained by rotational moulding are generally hollow parts without any welding lines. Being hollow, the rotomoulded articles according the present invention typically comprise one or more cavities. In an embodiment, enhanced insulation properties or structural properties can be obtained by filling these cavities with a polyurethane (PU), such as a polyurethane foam.

The inventors found that for the rotomoulded articles according to the present invention the adherence between the article inner wall and a PU foam is excellent.

Accordingly, in particular embodiments, the present rotomoulded articles comprise at least one cavity which is filled with a polyurethane, such as a polyurethane foam.

PU foams can greatly enhance the structural and insulating properties of the rotomoulded article, without adding much weight to the article. The PU foam may be a rigid, semi-rigid, or soft PU foam. Rigid PU foams are preferred to enhance the structural properties of the rotomoulded article. The softness and elastic properties of the polyurethane foams depend on the choice of the polyol and isocyanate monomers, as the polyol monomers typically provide soft domains, and the isocyanate monomers form harder domains.

The type of PU polymer comprised by the PU foam is not critical to the present invention. The PU polymer may be made by introduction into the rotomoulded article of a PU forming composition as described below.

The filling with PU foam can be obtained by introducing a PU forming composition into one or more cavities of the rotomoulded article.

In general, such a PU forming composition comprises at least one isocyanate compound, hereinafter also referred to as "isocyanate monomer"; and at least one polyol, hereinafter also referred to as "polyol monomer".

Suitable isocyanate monomers include polyisocyanates, such as diisocyanates and/or triisocyanates. The polyisocyanates may be aliphatic, araliphatic and/or aromatic polyisocyanates, typically of the type R²-(NCO)ₓ with x being at least 2 and R² being an aromatic, aliphatic or combined aromatic/aliphatic group. Examples of R² are diphenylmethane, toluene, dicyclohexylmethane, hexamethylene, or groups providing a similar polyisocyanate.

Suitable polyol monomers include a hydroxyl terminated polyester (polyester polyols), a hydroxyl terminated polyether (polyether polyols), a hydroxyl terminated polycarbonate, or a mixture thereof. In particular embodiments, the polyol monomers comprise one or more monomers selected from the group comprising a polyether diol, a polyether triol, a polyester diol, and a polyester triol.

The polyurethane is generally made from the abovementioned polyol monomer, preferably polyether, which is further reacted with an isocyanate monomer, preferably a diisocyanate, along with one or more additives selected from a chain extender, a catalyst, a foam stabilizer, a filler, a dye, a pigment, a flame retarder, an antioxidant, a fungicide, and a biocide.

Foams can be made by using chemical or inert blowing agents while conducting above reactions, or by using a gas in order to create a froth during these reactions. A particularly suitable chemical blowing agent is water. Water can react with isocyanate functional groups, thereby releasing carbon dioxide, which can act as blowing gas. Accordingly, in particular embodiments, the PU forming composition comprises water.

The amount of blowing agent present in the PU forming mixture influences the density of the PU foam formed by the PU forming composition.

### EXAMPLES

The following examples illustrate the invention, but by no means intend to limit the scope of the invention. Unless otherwise stated herein, the amounts of the ingredients listed herein are given in % by weight (wt.%).

### Example 1

### Materials used in the examples

### Layer B: thermoplastic polyester = PLA

As the polyester a PLA was used, namely a poly-L-lactide (PLLA 6201D from Natureworks) in the form of powder obtained after grinding pellets of PLLA 6201D. The average particle size of the particles of the powder after grinding is of 300 µm. The properties of PLLA 6201D are given in Table 1.

**Table 1**

| **PURITY ⁽¹⁾** | | | |
|---|---|---|---|
| L-poly-Lactide content | % w/w | Min. 99 | |
| Water content | ppm | Max. 250 | |
| Free Lactide content | % w/w | Max. 0.4 | |

| **PHYSICAL PROPERTIES PLA POLYMER ⁽¹⁾** | | | |
|---|---|---|---|
| Specific Gravity @25°C | | 1.24 | ISO 1183 |
| Melt Density @230°C | | 1.08-1.12 | |
| Melt Index @190°C/2.16kg | g/10 min | 10-14 | ISO 1133 |
| Haze (2 mm) | % | < 5 | ISO 14782 |
| Transmittance (2 mm) | % | > 90 | ISO 14782 |
| Glass Transition Temperature | °C | 55-60°C | ISO 11357 |
| Crystalline Melt Temperature | °C | 175-180°C | ISO 11357 |

| | | | |
|---|---|---|---|
| (1): Typical properties; not to be construed as specifications. | | | |

### Layer C:

The composition used for layer C is listed in Table 2. The composition was compounded on a co-rotative twin screw extruder (60 mm diameter, L/D = 40).

**Table 2**

| | | |
|---|---|---|
| Polyolefin | PE Lumicene mPE M4041UV | 87 wt.% |
| Polyester | PLLA DPO95: | 10wt.% |
| Co or ter-polymer | Lotader AX8840® (sold by Arkema®): | 2 wt.% |
| Ionomer | Surlyn® 1650 E (sold by DuPont) | 1 wt.% |

*Polyolefin:* As the polyolefin, a polyethylene resin was used, more particularly mPE M4041UV® from Total Petrochemicals. The white polyethylene powders were obtained after grinding the polyethylene pellets. The polyethylene having a density of 0.940 g/cm³ (ISO 1183) and melt index MI2 of 4 g/10 min (ISO 1133 condition D under a load of 2,16kg at 190°C). The average particle size of the powder after grinding is of 300 µm. The polyethylene was prepared with ethylene bis(tetrahydroindenyl) zirconium dichloride catalyst. The tensile modulus was around 800 MPa as measured according to ISO527.

*Polyester.* PLLA DPO95 same as described for layer B.

*Ionomer:* Surlyn® 1650 E (sold by DuPont) was used as ionomer. Surlyn® 1650 E is a zinc ionomer, more particularly a copolymer of ethylene and methacrylic acid.

*Copolymer:* Lotader AX8840® (sold by Arkema®) was used as the optional copolymer compatibilizing agent. LOTADER AX8840® is a random copolymer of ethylene and glycidyl methacrylate, polymerized under high-pressure in an autoclave process.

Physical properties of Lotader® as sold:
- Melt index measured at 190°C under a load of 2.16 kg of 5 g/10min measured according to ISO 1133
- Glycidyl methacrylate content of 8 wt.% as measured by FTIR
- Ethylene monomer of 92 wt.% as measured by FTIR
- Density (at 23°C) of 0.94 g/cm³ measured according to ISO 1183
- Melting point at 106 °C measured according to ISO 11357-3

### Layer A: fibers impregnated with a composition comprising at least one vinyl ester resin

The starting material used for layer A are listed in Table 3.

**Table 3**

| Product reference | Supplier | Technical function | Chemical nature |
|---|---|---|---|
| Epovia ® KRF 1001 | CCP composites | Vinyl ester resin | Vinyl ester based on bisphenol A: 41.5% styrene (% dry resin: 58.5%); viscosity: 4.5 dPa · s (25° C.),I_{A} < 8 |
| Epovia ® EP KRF 1100 | CCP composites | Vinyl ester resin | Vinyl ester based on bisphenol A: 0% styrene |
| Epovia ® EP KRF2000 | CCP composites | Vinyl ester brominated | Epoxy Vinyl ester brominated Medium viscosity-Medium reactivity |
| Accelerator® NL-23 | Akzo Nobel | Accelerator of peroxide | Solution of cobalt 2-ethylhexanoate salt and of dimethylaniline in a white spirit |
| Butanox® LPT | Akzo Nobel | Peroxide initiator | Methyl ethyl ketone peroxide in diisobutyl phthalate/active oxygen: 8.4-8.6% |
| Luperox K12 | Arkema | Peroxide initiator | Methyl ethyl ketone peroxide |
| Mat 123 | Vetrotex | Glass fibre reinforcement | Glass mat comprising powder binder - Mat 450 g/m² |

### Rotomoulded articles:

Seven bottles (bottles n° 1, 2, 3, 4, 5, 6, 7) were manufactured using a Leonardo@ rotomoulding machine (mould heated by an oil-filled heating jacket), from Persico®. Cooling of the moulds was obtained via external air cooling only. Air was used at room temperature (between 20 to 25°C).

The composition and thickness of the layers of the bottles is shown in Table 4.

**Table 4**

| **Bottle** | **Layer B thickness (mm)** | **Layer C Thickness (mm)** | **PLA: Crystallized (C) Or Amorphous (A)** |
|---|---|---|---|
| 1 | 3 | 0 | A |
| 2 | 3 | 0 | C |
| 3 | 3 | 0 | C |
| 4 | 2 | 7 | A |
| 5 | 2 | 5 | A |
| 6 | 2 | 5 | C |
| 7 | 2 | 7 | C |

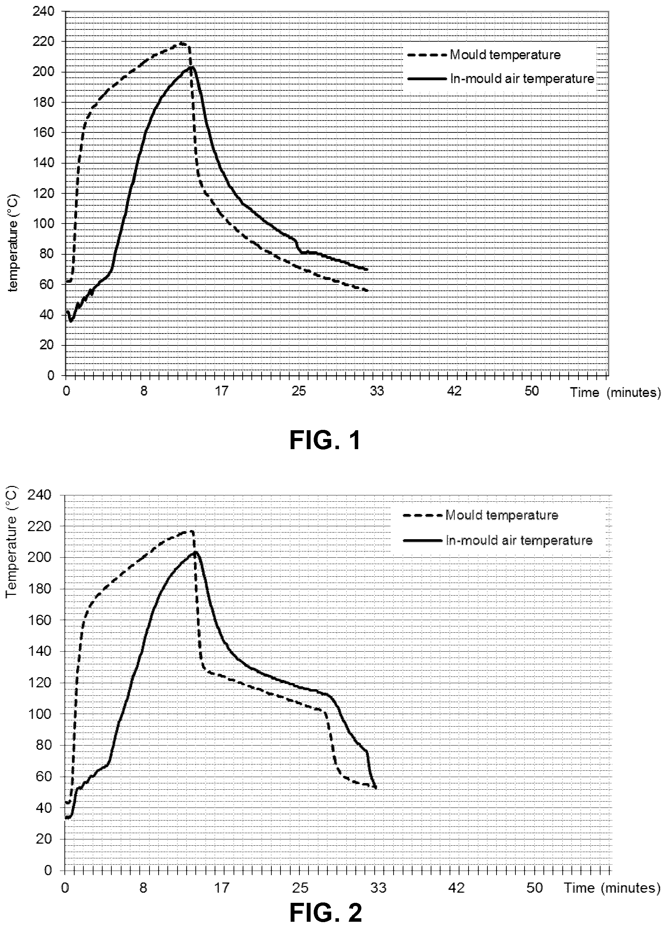

For the bottles comprising only one layer B of PLA, 900g of PLA powder were loaded in the mould, followed by manufacturing the bottle by rotational moulding. The parameters of the cycle are shown in Figures 1 to 3.

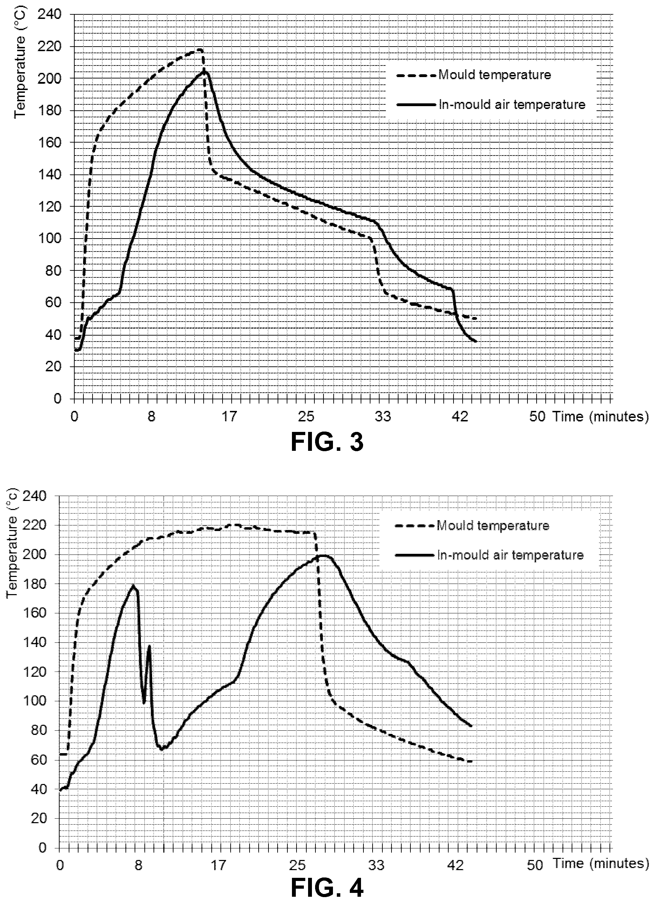

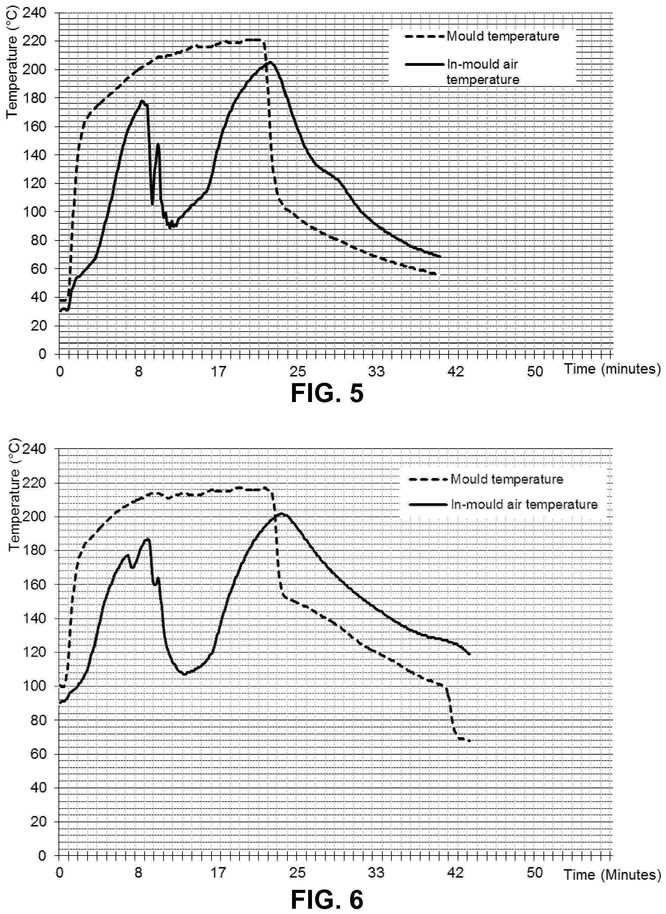

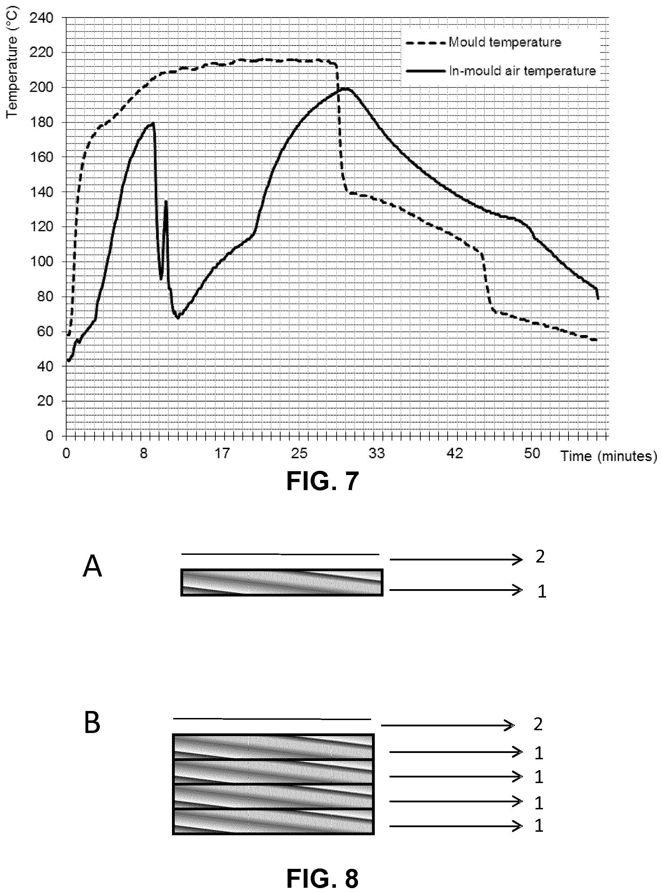

Figure 1 represents a graph showing the temperature cycle of the rotomoulding process for bottle 1. Figure 2 represents a graph showing the temperature cycle of the rotomoulding process for bottle 2. Figure 3 represents a graph showing the temperature cycle of the rotomoulding process for bottle 3. For the bottles comprising a first layer of PLA (Layer B), and a layer C: 600g of PLA powder were loaded in the mould, followed by manufacturing the bottle by rotational moulding, during which 1.1 kg of composition for layer C was further added. The parameters of the cycle are shown in Figures 4 to 7. Figure 4 represents a graph showing the temperature cycle of the rotomoulding process for bottle 4. Figure 5 represents a graph showing the temperature cycle of the rotomoulding process for bottle 5. Figure 6 represents a graph showing the temperature cycle of the rotomoulding process for bottle 6. Figure 7 represents a graph showing the temperature cycle of the rotomoulding process for bottle 7.

An article according to an embodiment of the invention was prepared by applying five superposed layers A on the outer surface of bottle n°6. Layer A comprised a 450 g/m² glass mat embedded in a composition comprising KRF1100. The first step of stratification comprised applying a first layer comprising 450 g/m² glass mat with Epovia KRF1100 (and 0.5 wt.% NL 23 et 1.5 wt.% Butanox LPT), the ratio glass to resin was about 30%. The first layer A was applied with a spiked roller. The second step comprised applying over the first layer a second layer comprising 450 g/m² glass mat with Epovia KRF1100 (and 0.5 wt.% NL 23 and 1.5 wt.% Butanox LPT), the ratio glass to resin was about 30%, and pressing the layer with a spiked roller. This step was repeated 3 times and the final product was cured for 16 h at 40°C.

The layered bottle n° 6 obtained was then filled with distilled water. The evolution of the layered bottle was evaluated as a function of time. After 6 weeks the bottle remained unaltered.

### Hydrolysis test

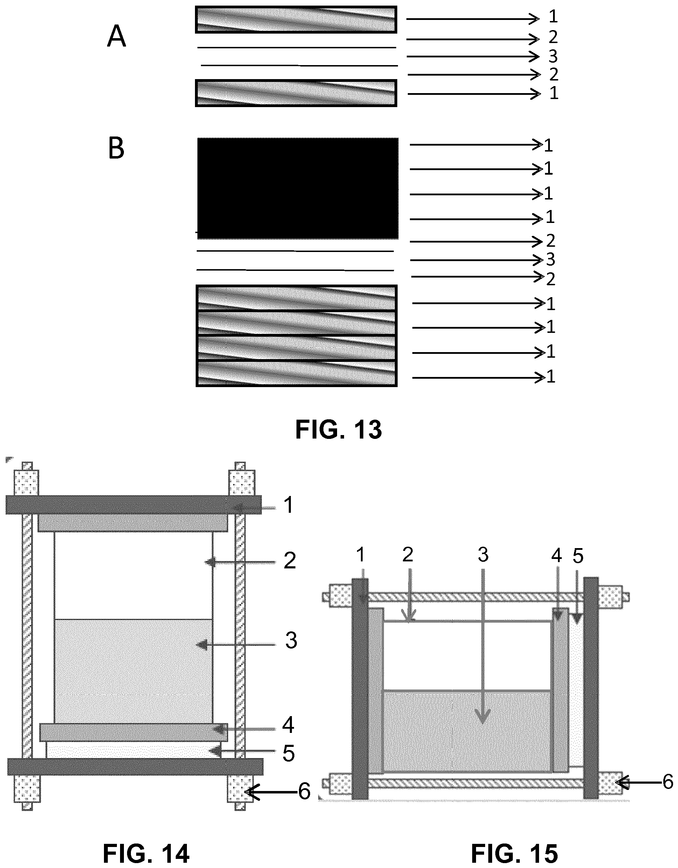

Hydrolysis test were performed on samples of the rotomoulded bottles 1 to 7, on which were applied one or more layers A. This method allows evaluating the resistance to hydrolysis of the resins used in the layered sample when in contact with an aqueous solution, and also evaluating the resistance to hydrolysis of the resins used in the layered sample when in contact with the vapor phase of the aqueous solution, for determined durations and temperatures. Samples (11 cm x 11 cm) were cut out of the bottle. One or more layers A were applied to the sample. The first step of stratification of the cut sample comprised applying a first layer comprising 450 g/m² glass mat with unsaturated polyester resin (and 0.5 wt.% NL 23 and 1.5 wt.% Butanox LPT), the ratio glass to resin was about 30%. This step was repeated when more than one layer A was used. The final product was cured for 2 h at 60°C. The test was performed in a test device as schematically illustrated in Figure 14.The device comprised a glass cell (hollow cylinder) 2 which was sealed at each end with a stainless steel plate 1 secured with blots 6. Leaks were prevented by means of suitable sealing means (O-ring 4). The test device was half filled with an aqueous solution 3 (demineralized water). The layered sample 5 was secured at the bottom of the test device.

The test device was then placed in an oven at 60°C. The position of the test device was such that at least part of the test sample 5 was in contact with the aqueous solution 3 and the other half was in contact with the vapor phase thereof (the device was tilted side way as shown in Figure 15). The temperature of the oven was maintained constant for the duration of the test. Structures modifications of the samples were monitored and allowed evaluating the behavior of the material in contact with water.

Table 5 lists layers A tested. The resin composition of layer A comprised in addition to the unsaturated polyester 0.5 wt.% NL 23 and 1.5 wt.% Luperox K12.

**Table 5**

| **Layers A:** | **Unsaturated polyester** | **Mats numbers** | **Oven temperature** |
|---|---|---|---|
| 1A | Epovia KRF 1001 | 1 mat | 60 °C |
| 2A | Epovia KRF 1001 | 3 mats | 60 °C |
| 3A | Epovia KRF 1001 | 5 mats | 60 °C |
| 4A | Epovia KRF 1001 | 0 mat | 60 °C |
| 5A | Epovia KRF 1001 | 5 mats | 60 °C |
| 6A | Epovia KRF 1001 | 5 mats | 60 °C |
| 7A | Epovia KRF 1001 | 5 mats | 60 °C |
| 8A | Epovia KRF 1001 | 5 mats | 60 °C |
| 9A | Epovia KRF 1001 | 5 mats | 60 °C |
| 10A | Epovia KRF 1001 | 5 mats | 60 °C |
| 11A | Epovia KRF 1001 | 5 mats | 40 °C |
| 12A | Epovia KRF 1100 | 5 mats | 40 °C |
| 13A | Epovia KRF 1100 | 5 mats | 60 °C |
| 14A | Epovia KRF 2000 | 5 mats | 60 °C |

The layered samples tested are shown in Table 6.

**Table 6**

| **Tested Sample N°** | **Sample from bottle N°** | **Layers A** | **Mats number** |
|---|---|---|---|
| 1 | 6 | 1A | 1 mat |
| 2 | 6 | 2A | 3 mats |
| 3 | 6 | 3A | 5 mats |
| 4 | 3 | 4A | 0 mat |
| 5 | 1 | 5A | 5 mats |
| 6 | 7 | 6A | 5 mats |
| 7 | 3 | 7A | 5 mats |
| 8 | 7 | 8A | 5 mats |
| 9 | 5 | 9A | 5 mats |
| 10 | 2 | 10A | 5 mats |
| 11 | 6 | 11A | 5 mats |
| 12 | 6 | 12A | 5 mats |
| 13 | 6 | 13A | 5 mats |
| 14 | 6 | 14A | 5 mats |

After 21 days of the test was stopped and the aspect of the sample was evaluated. The results are shown in Table 7.

**Table 7**

| **Tested Sample N°** | **Sample from bottle N°** | **Layers A** | **Vapor phase** | **Liquid phase** |
|---|---|---|---|---|
| 1 | 6 | 1A | The sample was whitish with some blisters | The sample was whitish with some blisters |
| 2 | 6 | 2A | The sample had white streaks, the fibers were marked | The sample had white streaks, the fibers were marked |
| 3 | 6 | 3A | Low marking of the fibers | Low marking of the fibers |
| 4 | 3 | 4A | Sample was cracked and was not longer liquid proof | Sample was cracked and was not longer liquid proof |

After 96 days, the test was stopped and the aspect of the samples was evaluated. The results are shown in Table 8.

**Table 8**

| **Tested Sample N°** | **Sample from bottle N°** | **Layers A** | **Vapor phase** | **Liquid phase** |
|---|---|---|---|---|
| 5 | 1 | 5A | The sample had white streaks, the fibers were marked | The sample had white streaks, the fibers were marked |
| 6 | 7 | 6A | The sample had white streaks, the fibers were marked | The sample had white streaks, the fibers were marked |
| 7 | 3 | 7A | The sample had white streaks, the fibers were marked | The sample had white streaks, the fibers were marked |
| 8 | 7 | 8A | The fibers were marked, the resin was attacked | The fibers were marked, the resin was attacked |
| 9 | 5 | 9A | The fibers had white streaks, the fibers were marked | The fibers had white streaks, the fibers were marked |
| 10 | 2 | 10A | The fibers had white streaks, the fibers were marked | The fibers had white streaks, the fibers were marked |

After 51 days, the test was stopped and the aspect of the samples was evaluated. The results are shown in Table 9.

**Table 9**

| **Tested Sample N°** | **Sample from bottle N°** | **Layers A** | **Vapor phase** | **Liquid phase** |
|---|---|---|---|---|
| 11 | 6 | 11A | Weak white streaks on the resin and on the fibers | Weak white streaks on the resin and on the fibers |
| 12 | 6 | 12A | white streaks on the fibers, poor wettability of the fibres | white streaks on the fibers, poor wettability of the fibres |
| 13 | 6 | 13A | white streaks on the fibers, poor wettability of the fibres | white streaks on the fibers, poor wettability of the fibres |
| 14 | 6 | 14A | The fibers had white streaks, the fibers were marked | The fibers had white streaks, the fibers were marked |

### Adhesion tests

Samples from layered articles 12 and 13 (samples n° 12, 13) were further submitted to tearing tests, which tested the adhesion of the layers of the samples, after 21 days of hydrolysis test. The first test consisted in trying to manually separate the layers of the tested samples. The adhesion of the layers was very good.

The second test consisted in trying to separate the layers of the tested samples using pliers. The adhesion of the layers was very good.

The third test consisted in trying to separate the layers of the tested samples using perpendicular direct traction. The test comprised measuring the adhesion using perpendicular direct traction, and was performed using the protocol as described in http://www.groupe-cebtp.com/adm.php, incorporated hereby by reference. In short, using a trepan having 5cm diameter, circular sample were cut out from the tested samples. A metal plate of the same diameter as the circular sample was first sealed to the circular sample using either epoxy or polyester glue, and a pulling device was used to try to separate the layers of the sample. The test comprised trying to tear said circular sample using a force F perpendicular to the adhesion plan. The adhesion of the layers was very good and could not be separated even when using 510 N/cm³ parting force.

### Example 2

Different multilayered rotomoulded articles can be made according to the invention. Figures 8-13 represent schematic cross sectional view of multilayered rotomoulded structures for various embodiments of the rotomoulded articles described herein; wherein layers A, B, C and D have the compositions as described in the present specification and claims. In the figures layer A is numbered 1, layer B is numbered 2, layer C is numbered 3, foamed layer C is numbered 4, layer D is numbered 5.

Figure 8A represents structure comprising one outer layer A and an inner layer B. Layer B can have a thickness ranging from 50µm to 5 mm. Figure 8B represents a similar structure, comprising a plurality of outer layers A and an inner layer B. Structure of figure 8B can comprise up to 10 layers A.

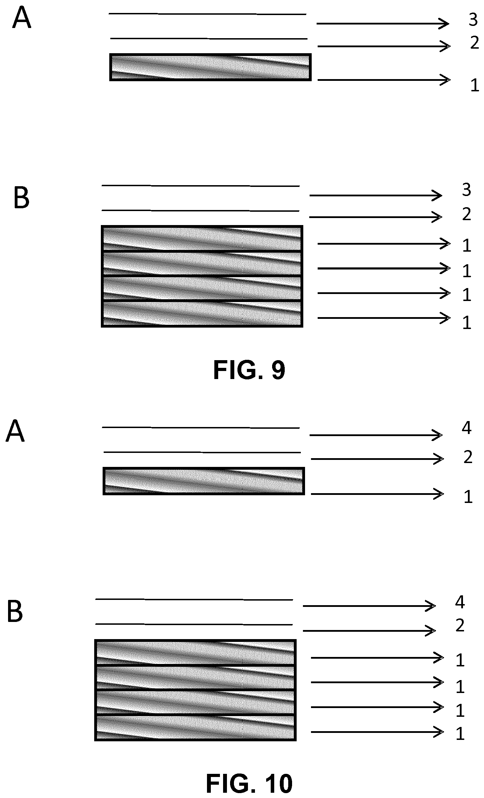

Figure 9A represents a structure comprising one outer layer A, an inner layer C and an intermediate layer B adjacent to layers A and C. Layer B can have a thickness ranging from 50µm to 5 mm. Figure 9B represents a similar structure, comprising a plurality of outer layers A. Structure of figure 9B can comprise up to 10 layers A.

Figure 10A represents a structure comprising one outer layer A, an inner foamed layer C and an intermediate layer B. Layer B can have a thickness ranging from 50 µm to 5 mm. Foamed layer C can have a thickness ranging from 5 mm to 100 mm. Figure 10B represents a similar structure, comprising a plurality of outer layers A. Structure of figure 10B can comprise up to 10 layers A.

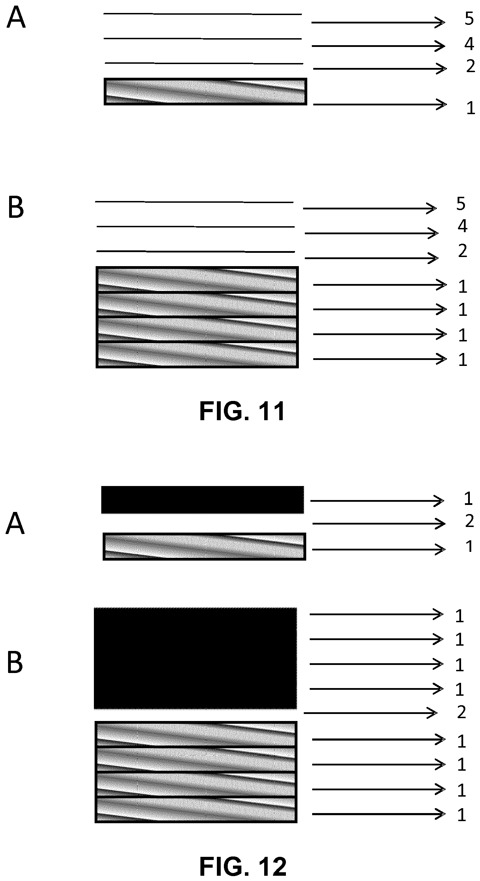

Figure 11A represents a structure comprising one outer layer A, a first intermediate layer B, a second intermediate foamed layer C, and an inner layer D. Layer B can have a thickness ranging from 50 µm to 5 mm. Foamed layer C can have a thickness ranging from 5mm to 100mm. Layer D can have a thickness ranging from 0.5 mm to 10mm. Figure 11B represents a similar structure, comprising a plurality of outer layers A. Structure of figure 11B can comprise up to 10 layers A.

Figure 12A represents a structure comprising one outer layer A, a first intermediate layer B, and an inner layer A. Layer B is therefore sandwiched between two layers A. Figure 12B represents a similar structure, comprising a plurality of outer layers A and a plurality of inner layers A. Structure of figure 12B can comprise up to 10 outer layers A and up to 10 inner layers A.

Figure 13A represents a structure comprising one outer layer A, a first intermediate layer B, a second intermediate layer C, and an inner layer A. Figure 13B represents a similar structure, comprising a plurality of outer layers A and a plurality of inner layers A. Structure of figure 13B can comprise up to 10 outer layers A and up to 10 inner layers A.

The non-foamed PE/PLA layer (3) can have a thickness of about 0.5mm to 10mm. In all these examples, the article having the structures shown in Figures 8 to 13 may further be filled with a polyurethane foam.

## Claims

1. A rotomoulded article comprising :
(i) at least one layer A comprising fibers embedded in a composition comprising at least one vinyl ester resin; and
(ii) at least one layer B comprising:
• from 40 to 100 %, preferably from 75 to 100 % by weight relative to the total weight of said layer B of at least one thermoplastic polyester;
• from 0 to 60 % by weight relative to the total weight of said layer B of a polyolefin composition; said composition comprising at least one polyolefin, preferably said at least one polyolefin is polyethylene; and
• from 0 to 20 % by weight relative to the total weight of said layer B of at least one additive selected from compatibilizing agent and/or impact modifier;
wherein at least one layer A is in contact with one layer B.

2. The rotomoulded article according to claim 1, wherein the at least one layer A contacting the one layer B shows an adhesion to said layer B, said adhesion being such that said at least one layer A and said layer B cannot be separated when using a parting force of at most 510 N/cm³, said force being exerted by a pulling device on a 5 cm diameter circular sample in a direction perpendicular to the adhesion plan.

3. The rotomoulded article according to any one of claims 1 or 2, wherein said rotomoulded article forms a hollow body with an inner surface and an outer surface, and wherein at least one layer A is disposed on at least a part of the outer surface of the article and/or disposed on at least a part of the inner surface of the article.

4. The rotomoulded article according to any one of claims 1 to 3, wherein said rotomoulded article forms a hollow body with an inner surface and an outer surface, wherein at least one layer A is disposed on at least a part of the outer surface of the article, and wherein the outer surface of the article is further coated with coating composition, preferably the coating composition being fire-retardant.

5. The rotomoulded article according to any one of claims 1 to 4, wherein the at least one vinyl ester resin of the composition of the at least one layer A is produced by a process comprising contacting at least one compound comprising at least one epoxy group per compound, preferably having at least two epoxy groups per compound; with at least one compound selected from the group comprising compound of formula R¹-C(=O)-O-R², and compound of formula (a); 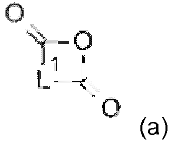 wherein R¹ is selected from the group comprising C₁₋₆alkyl, C₂₋₆alkenyl, C₂₋₆alkynyl; C₆₋₁₂aryl, C₆₋₁₂arylC₁₋₆alkyl, and C₆₋₁₂arylC₂₋₆alkenyl; each group being optionally substituted with one or more substituents each independently selected from the group comprising C₁₋₆alkyl, C₂₋₆alkenyl, C₂₋₆alkynyl; carboxyl, hydroxyl, C₁₋₆alkyloxycarbonyl, C₂₋₆alkenyloxycarbonyl, C₂₋₆alkynyloxycarbonyl and C₆₋₁₂ aryl, wherein R² is hydrogen or is selected from the group comprising C₁₋₆alkyl, C₂₋₆alkenyl, C₂₋₆ alkynyl; C₆₋₁₂ aryl, C₆₋₁₂arylC₁₋₆alkyl, and C₆₋₁₂arylC₂₋₆alkenyl; each group being optionally substituted with one or more substituents each independently selected from the group comprising C₁₋₆alkyl, C₂₋₆alkenyl, C₂₋₆ alkynyl, carboxyl, hydroxyl, C₁₋₆ alkyloxycarbonyl, C₂₋₆alkenyloxycarbonyl, C₂₋₆ alkynyloxycarbonyl; and wherein L¹ is a C₂₋₆alkenylene optionally substituted with one or more hydroxyl or C₁₋₆alkyl;
with preference, the at least one polyester of the composition of the at least one layer A is produced by a process comprising contacting at least one compound comprising at least one epoxy group per compound, preferably having at least two epoxy groups per compound; with at least one methacrylic acid or an ester thereof.

6. The rotomoulded article according to claim 5, wherein the at least one compound comprising at least one epoxy group per compound is produced by a process comprising contacting at least one epihalohydrin with at least one polyphenol, preferably the polyphenol is selected from the group comprising resorcinol, bis(4-hydroxyphenyl)-2,2-propane, catechol, bis(4-hydroxyphenyl)-1,1-isobutane, 4,4-dihydroxybenzophenone, bis(4-hydroxyphenyl-1,1-ethane, bis(2-hydroxynaphenyl)-methane, hydroquinone, 1,5-hydroxynaphthalene, and any combination thereof., preferably the at least one compound comprising at least one epoxy group per compound is a polyglycidyl ether of a polyphenol.

7. The rotomoulded article of any one of claims 1 to 6, wherein the composition of the at least one layer A further comprises:
- at least one reactive diluent, preferably said at least one diluents being selected from the group comprising styrene; vinyl toluene; (meth)acrylate such as methylmethacrylate, acrylate, methacrylate, glycidyl methacrylate, hydroxyl methyl methacrylate, hydroxy propylmethacrylate, acrylic acid, and methacrylic acid; and a combination thereof, and/or
- at least one catalyst, wherein the at least one catalyst is an organic peroxide, preferably the at least one catalyst is methyl ethyl ketone peroxide.

8. The rotomoulded article according to any one of claims 1 to 7, wherein the composition of the at least one layer A is styrene free.

9. The rotomoulded article according to any one of claims 1 to 8, further comprising at least one layer C, said layer C comprising
• from 50 to 99.4 % by weight relative to the total weight of said layer C of at least one polyolefin, which can be different from the polyolefin of layer B, preferably said at least one polyolefin is polyethylene;
• from 0.5 to 50 % by weight relative to the total weight of said layer C of at least one thermoplastic polyester, which can be different from the thermoplastic polyester of layer B;
• from 0.1 to 20 % by weight relative to the total weight of said layer C of at least one additive selected from compatibilizing agent and/or impact modifier, which can be different from the compatibilizing agent and/or impact modifier of layer B;
• optionally from 0.1 to 20 % by weight relative to the total weight of said layer C of at least one ionomer;
and wherein at least one layer C is contacting one layer B.

10. The rotomoulded article according to any one of claims 1 to 9, wherein said at least one thermoplastic polyester in layer B and/or in layer C is selected from the group comprising poly(lactic acid), copolymers thereof, polyhydroxyalkanoate, polycaprolactone, copolyesters, polyesteramides, and any combination thereof, preferably said at least one thermoplastic polyester in layer B and/or in layer C is a poly(lactic acid).

11. The rotomoulded article according to any one of claims 1 to 10, wherein said at least one additive selected from compatibilizing agent and/or impact modifier of layer C and/or layer B, is at least one co- or ter-polymer comprising:
(a) 50 to 99.9 % by weight of ethylene or styrene monomer,
(b) 0.1 to 50 % by weight of an unsaturated anhydride containing monomer, unsaturated epoxide containing monomer or unsaturated carboxylic acid containing monomer,
(c) 0 to 50 % by weight of a (meth)acrylic ester monomer, preferably from 0.1 to 50 % by weight of a (meth)acrylic ester monomer.

12. The rotomoulded article according to any one of claims 1 to 11, wherein at least one additive selected from compatibilizing agent and/or impact modifier of layer C and/or layer B is at least one co- or ter-polymer is selected from the group comprising copolymers of ethylene and glycidyl methacrylate; terpolymers of ethylene, acrylic ester monomers, and glycidyl methacrylate; terpolymers of styrene, acrylic ester monomers, and glycidyl methacrylate; terpolymers of ethylene, acrylic ester monomers, and maleic anhydride; terpolymers of styrene, acrylic ester monomers, and maleic anhydride; and any combination thereof; preferably, the compatibilizing agent is a copolymer of ethylene and glycidyl methacrylate.

13. The rotomoulded article according to any one of claim 1 to 12, wherein at least one layer C is foamed.

14. The rotomoulded article according to any one of claim 1 to 13, further comprising one or more openings and/or inserts of plastic or metal and/or kiss-offs.

15. A method for preparing a rotomoulded article according to any one of claims 1 to 14, comprising the steps of:
(i) providing a mould;
(ii) optionally applying to at least a part of the interior wall of said mould at least one layer A comprising fibers embedded in a composition comprising at least one vinyl ester resin;
(iii) moulding in the mould at least one layer B comprising:
• from 40 to 100 %, preferably from 75 to 100 %, by weight relative to the total weight of said layer B of at least one thermoplastic polyester;
• from 0 to 60 % by weight relative to the total weight of said layer B of a polyolefin composition; said composition comprising at least one polyolefin, preferably said at least one polyolefin is polyethylene; and
• from 0 to 20 % by weight relative to the total weight of said layer B of at least one additive selected from compatibilizing agent and/or impact modifier;
thereby obtaining a moulded layer B comprising at least one outer surface and one inner surface,
(iv) optionally applying to at least a part of the inner surface of the moulded layer B at least one layer A comprising fibers embedded in a composition comprising at least one vinyl ester resin;
(v) optionally applying to at least a part of the outer surface of the moulded layer B at least one layer A comprising fibers embedded in a composition comprising at least one vinyl ester resin;
wherein at least one of steps (ii), (iv) or (v) is not optional, and at least one layer A is contacting one layer B, thereby obtaining the article according to any one of claims 1 to 14.

## Patentansprüche

1. Rotationsgeformter Gegenstand, umfassend
(i) mindestens eine Schicht A, die Fasern umfasst, die in einer Zusammensetzung eingebettet sind, die mindestens ein Vinylesterharz umfasst; und
(ii) mindestens eine Schicht B, umfassend:
• 40 bis 100 Gew.-%, vorzugsweise 75 bis 100 Gew.-%, bezogen auf das Gesamtgewicht der Schicht B, mindestens eines thermoplastischen Polyesters;
• 0 bis 60 Gew.-%, bezogen auf das Gesamtgewicht der Schicht B, einer Polyolefinzusammensetzung; wobei die Zusammensetzung mindestens ein Polyolefin umfasst, wobei das mindestens eine Polyolefin vorzugsweise Polyethylen ist; und
• 0 bis 20 Gew.-%, bezogen auf das Gesamtgewicht der Schicht B, mindestens eines Additivs, ausgewählt aus Verträglichkeitsvermittler und/oder Schlagzähigkeitsverbesserer;
wobei mindestens eine Schicht A in Kontakt mit einer Schicht B steht.

2. Rotationsgeformter Gegenstand nach Anspruch 1, wobei die mindestens eine Schicht A, die die eine Schicht B kontaktiert, eine Haftung an die Schicht B zeigt, wobei die Haftung derart ist, dass die mindestens eine Schicht A und die Schicht B bei Verwendung einer Trennungskraft von höchstens 510 N/cm³ nicht getrennt werden können, wobei diese Kraft durch eine Ziehvorrichtung auf eine kreisförmige Probe mit einem Durchmesser von 5 cm in einer Richtung senkrecht zu der Haftungsebene ausgeübt wird.

3. Rotationsgeformter Gegenstand nach einem der Ansprüche 1 oder 2, wobei der rotationsgeformte Gegenstand einen hohlen Körper mit einer inneren Oberfläche und einer äußeren Oberfläche bildet und wobei mindestens eine Schicht A auf mindestens einem Teil der äußeren Oberfläche des Gegenstands angeordnet ist und/oder auf mindestens einem Teil der inneren Oberfläche des Gegenstands angeordnet ist.

4. Rotationsgeformter Gegenstand nach einem der Ansprüche 1 bis 3, wobei der rotationsgeformte Gegenstand einen hohlen Körper mit einer inneren Oberfläche und einer äußeren Oberfläche bildet, wobei mindestens eine Schicht A auf mindestens einem Teil der äußeren Oberfläche des Gegenstands angeordnet ist und wobei die äußere Oberfläche des Gegenstands ferner mit einer Beschichtungszusammensetzung beschichtet ist, wobei die Beschichtungszusammensetzung vorzugsweise feuerhemmend ist.

5. Rotationsgeformter Gegenstand nach einem der Ansprüche 1 bis 4, wobei das mindestens eine Vinylesterharz der Zusammensetzung der mindestens einen Schicht A durch ein Verfahren hergestellt wird, umfassend das Inkontaktbringen von mindestens einer Verbindung, die mindestens eine Epoxygruppe pro Verbindung umfasst, vorzugsweise mindestens zwei Epoxygruppen pro Verbindung aufweist; mit mindestens einer Verbindung, ausgewählt aus der Gruppe, umfassend die Verbindung der Formel R¹-C(=O)-O-R² und die Verbindung der Formel (a); 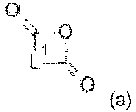 wobei R¹ ausgewählt ist aus der Gruppe, umfassend C₁₋₆-Alkyl, C₂₋₆-Alkenyl, C₂₋₆-Alkinyl; C₆₋₁₂-Aryl, C₆₋₁₂-Aryl-C₁₋₆-alkyl und C₆₋₁₂-Aryl-C₂₋₆-alkenyl; wobei jede Gruppe gegebenenfalls mit einem oder mehreren Substituenten substituiert ist, die jeweils unabhängig ausgewählt sind aus der Gruppe, umfassend C₁₋₆-Alkyl, C₂₋₆-Alkenyl, C₂₋₆-Alkinyl; Carboxyl, Hydroxyl, C₁₋₆-Alkyloxycarbonyl, C₂₋₆-Alkenyloxycarbonyl, C₂₋₆-Alkinyloxycarbonyl und C₆₋₁₂-Aryl, wobei R² Wasserstoff oder aus der Gruppe ausgewählt ist, umfassend C₁₋₆-Alkyl, C_{2 -6}-Alkenyl, C₂₋₆-Alkinyl; C₆₋₁₂-Aryl, C₆₋₁₂-Aryl-C₁₋₆-Alkyl und C₆₋₁₂-Aryl-C₂₋₆-alkenyl; wobei jede Gruppe gegebenenfalls mit einem oder mehreren Substituenten substituiert ist, die jeweils unabhängig ausgewählt sind aus der Gruppe, umfassend C₁₋₆-Alkyl, C₂₋₆-Alkenyl, C₂₋₆-Alkinyl, Carboxyl, Hydroxyl, C₁₋₆-Alkyloxycarbonyl, C₂₋₆-Alkenyloxycarbonyl, C₂₋₆-Alkinyloxycarbonyl; und wobei L¹ ein C₂₋₆-Alkenylen ist, das gegebenenfalls mit einem oder mehreren Hydroxyl oder C₁₋₆-Alkyl substituiert ist;
vorzugsweise wird der mindestens eine Polyester der Zusammensetzung der mindestens einen Schicht A durch ein Verfahren hergestellt, umfassend das Inkontaktbringen von mindestens einer Verbindung, die mindestens eine Epoxygruppe pro Verbindung umfasst, vorzugsweise mindestens zwei Epoxygruppen pro Verbindung aufweist; mit mindestens einer Methacrylsäure oder einem Ester davon.

6. Rotationsgeformter Gegenstand nach Anspruch 5, wobei die mindestens eine Verbindung, die mindestens eine Epoxygruppe pro Verbindung umfasst, durch ein Verfahren hergestellt wird, umfassend das Inkontaktbringen von mindestens einem Epihalohydrin mit mindestens einem Polyphenol, wobei das Polyphenol vorzugsweise ausgewählt ist aus der Gruppe, umfassend Resorcin, Bis(4-hydroxyphenyl)-2,2-propan, Brenzkatechin, Bis(4-hydroxyphenyl)-1,1-isobutan, 4,4-Dihydroxybenzophenon, Bis(4-hydroxyphenyl-1,1-ethan, Bis(2-Hydroxynaphenyl)-methan, Hydrochinon, 1,5-Hydroxynaphthalin und eine beliebige Kombination davon, wobei vorzugsweise die mindestens eine Verbindung, die mindestens eine Epoxygruppe pro Verbindung umfasst, ein Polyglycidylether eines Polyphenols ist.

7. Rotationsgeformter Gegenstand nach einem der Ansprüche 1 bis 6, wobei die Zusammensetzung der mindestens einen Schicht A ferner umfasst:
- mindestens einen Reaktivverdünner, wobei vorzugsweise das mindestens eine Verdünnungsmittel ausgewählt ist aus der Gruppe, umfassend Styrol; Vinyltoluol; (Meth)acrylat, wie Methylmethacrylat, Acrylat, Methacrylat, Glycidylmethacrylat, Hydroxylmethylmethacrylat, Hydroxypropylmethacrylat, Acrylsäure und Methacrylsäure; und eine Kombination davon und/oder
- mindestens einen Katalysator, wobei der mindestens eine Katalysator ein organisches Peroxid ist, wobei vorzugsweise der mindestens eine Katalysator Methylethylketonperoxid ist.

8. Rotationsgeformter Gegenstand nach einem der Ansprüche 1 bis 7, wobei die Zusammensetzung der mindestens einen Schicht A styrolfrei ist.

9. Rotationsgeformter Gegenstand nach einem der Ansprüche 1 bis 8, ferner umfassend mindestens eine Schicht C, wobei die Schicht C umfasst:
• 50 bis 99,4 Gew.-%, bezogen auf das Gesamtgewicht der Schicht C, mindestens eines Polyolefins, das sich von dem Polyolefin der Schicht B unterscheiden kann, wobei das mindestens eine Polyolefin Polyethylen ist;
• 0,5 bis 50 Gew.-%, bezogen auf das Gesamtgewicht der Schicht C, mindestens eines thermoplastischen Polyesters, der sich von dem thermoplastischen Polyester der Schicht B unterscheiden kann;
• 0,1 bis 20 Gew.-%, bezogen auf das Gesamtgewicht der Schicht C, mindestens eines Additivs, ausgewählt aus Verträglichkeitsvermittler und/oder Schlagzähigkeitsverbesserer, der sich von dem Verträglichkeitsvermittler und/oder Schlagzähigkeitsverbesserer der Schicht B unterscheiden kann;
• gegebenenfalls von 0,1 bis 20 Gew.-%, bezogen auf das Gesamtgewicht der Schicht C, von mindestens einem lonomer;
und wobei mindestens eine Schicht C eine Schicht B kontaktiert.

10. Rotationsgeformter Gegenstand nach einem der Ansprüche 1 bis 9, wobei der mindestens eine thermoplastische Polyester in Schicht B und/oder in Schicht C ausgewählt ist aus der Gruppe, umfassend Poly(milchsäure), Copolymere davon, Polyhydroxyalkanoat, Polycaprolacton, Copolyester, Polyesteramide und jede Kombination davon, wobei vorzugsweise der mindestens eine thermoplastische Polyester in Schicht B und/oder in Schicht C eine Poly(milchsäure) ist.

11. Rotationsgeformter Gegenstand nach einem der Ansprüche 1 bis 10, wobei das mindestens eine Additiv, das aus Verträglichkeitsvermittler und/oder Schlagzähigkeitsverbesserer von Schicht C und/oder Schicht B ausgewählt ist, mindestens ein Co- oder Terpolymer ist, umfassend:
(a) 50 bis 99,9 Gew.-% eines Ethylen- oder Styrolmonomers,
(b) 0,1 bis 50 Gew.-% eines ungesättigten Anhydrid enthaltenden Monomers, eines ungesättigten Epoxid enthaltenden Monomers oder eines ungesättigten Carbonsäure enthaltenden Monomers,
(c) 0 bis 50 Gew.-% eines (Meth)acrylsäureestermonomers, vorzugsweise 0,1 bis 50 Gew.-% eines (Meth)acrylestermonomers.

12. Rotationsgeformter Gegenstand nach einem der Ansprüche 1 bis 11, wobei mindestens ein Additiv, das aus Verträglichkeitsvermittler und/oder Schlagzähigkeitsverbesserer von Schicht C und/oder Schicht B ausgewählt ist, mindestens ein Co- oder Terpolymer ist, ausgewählt aus der Gruppe, umfassend Copolymere von Ethylen und Glycidylmethacrylat; Terpolymere von Ethylen, Acrylestermonomeren und Glycidylmethacrylat; Terpolymere von Styrol, Acrylestermonomeren und Glycidylmethacrylat; Terpolymere von Ethylen, Acrylestermonomeren und Maleinsäureanhydrid; Terpolymere von Styrol, Acrylestermonomeren und Maleinsäureanhydrid; und eine beliebige Kombination davon; vorzugsweise ist der Verträglichkeitsvermittler ein Copolymer von Ethylen und Glycidylmethacrylat.

13. Rotationsgeformter Gegenstand nach einem der Ansprüche 1 bis 12, wobei mindestens eine Schicht C geschäumt ist.

14. Rotationsgeformter Gegenstand nach einem der Ansprüche 1 bis 13, ferner umfassend eine oder mehrere Öffnungen und/oder Einsätze aus Kunststoff oder Metall und/oder Abdrückelemente.

15. Verfahren zur Herstellung eines rotationsgeformten Gegenstands nach einem der Ansprüche 1 bis 14, umfassend die Schritte:
(i) Bereitstellen einer Form;
(ii) gegebenenfalls Aufbringen von mindestens einer Schicht A, die Fasern umfasst, die in einer Zusammensetzung eingebettet sind, die mindestens ein Vinylesterharz umfasst, auf mindestens einen Teil der Innenwand der Form;
(iii) Formen in der Form mindestens einer Schicht B, umfassend:
• 40 bis 100 Gew.-%, vorzugsweise 75 bis 100 Gew.-%, bezogen auf das Gesamtgewicht der Schicht B, mindestens eines thermoplastischen Polyesters;
• 0 bis 60 Gew.-%, bezogen auf das Gesamtgewicht der Schicht B, einer Polyolefinzusammensetzung; wobei die Zusammensetzung mindestens ein Polyolefin umfasst, wobei das mindestens eine Polyolefin vorzugsweise Polyethylen ist; und
• 0 bis 20 Gew.-%, bezogen auf das Gesamtgewicht der Schicht B, mindestens eines Additivs, ausgewählt aus Verträglichkeitsvermittler und/oder Schlagzähigkeitsverbesserer;
wodurch eine geformte Schicht B erhalten wird, die mindestens eine äußere Oberfläche und eine innere Oberfläche umfasst,
(iv) gegebenenfalls Aufbringen von mindestens einer Schicht A, die Fasern umfasst, die in einer Zusammensetzung eingebettet sind, die mindestens ein Vinylesterharz umfasst, auf mindestens einen Teil der inneren Oberfläche der geformten Schicht B;
(v) gegebenenfalls Aufbringen von mindestens einer Schicht A, die Fasern umfasst, die in einer Zusammensetzung eingebettet sind, die mindestens ein Vinylesterharz umfasst, auf mindestens einen Teil der äußeren Oberfläche der geformten Schicht B;
wobei mindestens einer der Schritte (ii), (iv) oder (v) nicht optional ist und mindestens eine Schicht A eine Schicht B kontaktiert, wodurch der Gegenstand gemäß einem der Ansprüche 1 bis 14 erhalten wird.

## Revendications

1. Article rotomoulé comprenant :
(i) au moins une couche A comprenant des fibres incorporées dans une composition comprenant au moins une résine d'ester vinylique ; et
(ii) au moins une couche B comprenant :
• de 40 à 100 %, de préférence de 75 à 100 % en poids par rapport au poids total de ladite couche B d'au moins un polyester thermoplastique ;
• de 0 à 60 % en poids par rapport au poids total de ladite couche B d'une composition de polyoléfine ; ladite composition comprenant au moins une polyoléfine, de préférence ladite au moins une polyoléfine étant un polyéthylène ; et
• de 0 à 20 % en poids par rapport au poids total de ladite couche B d'au moins un additif choisi parmi un agent de compatibilisation et/ou un modifiant choc ;
dans lequel au moins une couche A est en contact avec une couche B.

2. Article rotomoulé selon la revendication 1, dans lequel l'au moins une couche A en contact avec une couche B présente une adhérence à ladite couche B, ladite adhérence étant telle que ladite au moins une couche A et ladite couche B ne peuvent pas être séparées lors de l'utilisation d'une force de séparation d'au plus 510 N/cm³, ladite force étant exercée par un dispositif de traction sur une éprouvette circulaire de 5 cm de diamètre dans une direction perpendiculaire au plan d'adhérence.

3. Article rotomoulé selon l'une quelconque des revendications 1 à 2, dans lequel ledit article rotomoulé forme un corps creux avec une surface intérieure et une surface extérieure, et dans lequel au moins une couche A est disposée sur au moins une partie de la surface extérieure de l'article et/ou disposée sur au moins une partie de la surface intérieure de l'article.

4. Article rotomoulé selon l'une quelconque des revendications 1 à 3, dans lequel ledit article rotomoulé forme un corps creux avec une surface intérieure et une surface extérieure, dans lequel au moins une couche A est disposée sur au moins une partie de la surface extérieure de l'article et dans lequel la surface extérieure de l'article est en outre revêtue d'une composition de revêtement, de préférence la composition de revêtement étant ignifuge.

5. Article rotomoulé selon l'une quelconque des revendications 1 à 4, dans lequel l'au moins une résine d'ester vinylique de la composition de l'au moins une couche A est produite par un procédé comprenant la mise en contact d'au moins un composé comprenant au moins un groupe époxy par composé, ayant de préférence au moins deux groupes époxy par composé ; avec au moins un composé choisi dans le groupe comprenant un composé de formule R¹-C(=O)-O-R² et un composé de formule (a) ; 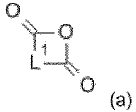 dans laquelle R¹ est choisi dans le groupe comprenant les groupes alkyle en C₁₋₆, alcényle en C₂₋₆, alcynyle en C₂₋₆ ; aryle en C₆₋₁₂, aryle en C₆₋₁₂-alkyle en C₁₋₆ et aryle en C₆₋₁₂-alcényle en C₂₋₆ ; chaque groupe étant éventuellement substitué par un ou plusieurs substituants choisis chacun indépendamment dans le groupe comprenant les groupes alkyle en C₁₋₆, alcényle en C₂₋₆, alcynyle en C₂₋₆ ; carboxyle, hydroxyle, alkyloxy en C₁₋₆-carbonyle, alcényloxy en C₂₋₆-carbonyle, alcynyloxy en C₂₋₆-carbonyle et aryle en C₆₋₁₂, où R² représente un atome d'hydrogène ou est choisi dans le groupe comprenant les groupes alkyle en C₁₋₆, alcényle en C₂₋₆, alcynyle en C₂₋₆ ; aryle en C₆₋₁₂, aryle en C₆₋₁₂-alkyle en C₁₋₆ et aryle en C₆₋₁₂-alcényle en C₂₋₆ ; chaque groupe étant éventuellement substitué par un ou plusieurs substituants choisis chacun indépendamment dans le groupe comprenant les groupes alkyle en C₁₋₆, alcényle en C₂₋₆, alcynyle en C₂₋₆, carboxyle, hydroxyle, alkyloxy en C₁₋₆-carbonyle, alcényloxy en C₂₋₆-carbonyle, alcynyloxy en C₂₋₆-carbonyle ; et dans laquelle L¹ représente un alcénylène en C₂₋₆ éventuellement substitué par un ou plusieurs groupes hydroxyle ou alkyle en C₁₋₆ ; de préférence, l'au moins un polyester de la composition de l'au moins une couche A est produit par un procédé comprenant la mise en contact d'au moins un composé comprenant au moins un groupe époxy par composé, de préférence ayant au moins deux groupes époxy par composé ; avec au moins un acide méthacrylique ou un ester de celui-ci.

6. Article rotomoulé selon la revendication 5, dans lequel l'au moins un composé comprenant au moins un groupe époxy par composé est produit par un procédé comprenant la mise en contact d'au moins une épihalogénhydrine avec au moins un polyphénol, de préférence le polyphénol étant choisi dans le groupe comprenant le résorcinol, le bis(4-hydroxyphényl)-2,2-propane, le catéchol, le bis(4-hydroxyphényl)-1,1-isobutane, la 4,4-dihydroxybenzophénone, le bis(4-hydroxyphényl-1,1-éthane, le bis(2- hydroxynaphényl)-méthane, l'hydroquinone, le 1,5-hydroxynaphtalène et toute combinaison de ceux-ci, de préférence l'au moins un composé comprenant au moins un groupe époxy par composé étant un éther polyglycidylique d'un polyphénol.

7. Article rotomoulé selon l'une quelconque des revendications 1 à 6, dans lequel la composition de l'au moins une couche A comprend en outre :
- au moins un diluant réactif, de préférence ledit au moins un diluant étant choisi dans le groupe comprenant le styrène ; le vinyltoluène ; un (méth)acrylate tel que le méthacrylate de méthyle, un acrylate, un méthacrylate, le méthacrylate de glycidyle, le méthacrylate d'hydroxylméthyle, le méthacrylate d'hydroxypropyle, l'acide acrylique et l'acide méthacrylique ; et une combinaison de ceux-ci, et/ou
- au moins un catalyseur, l'au moins un catalyseur étant un peroxyde organique, de préférence l'au moins un catalyseur étant le peroxyde de méthyléthylcétone.

8. Article rotomoulé selon l'une quelconque des revendications 1 à 7, dans lequel la composition de l'au moins une couche A est exempte de styrène.

9. Article rotomoulé selon l'une quelconque des revendications 1 à 8, comprenant en outre au moins une couche C, ladite couche C comprenant
• de 50 à 99,4 % en poids par rapport au poids total de ladite couche C d'au moins une polyoléfine, qui peut être différente de la polyoléfine de la couche B, de préférence ladite au moins une polyoléfine étant un polyéthylène ;
• de 0,5 à 50 % en poids par rapport au poids total de ladite couche C d'au moins un polyester thermoplastique, qui peut être différent du polyester thermoplastique de la couche B ;
• de 0,1 à 20 % en poids par rapport au poids total de ladite couche C d'au moins un additif choisi parmi un agent de compatibilisation et/ou un modifiant choc, qui peuvent être différents de l'agent de compatibilisation et/ou du modifiant choc de la couche B ;
• éventuellement de 0,1 à 20 % en poids par rapport au poids total de ladite couche C d'au moins un ionomère ;
et dans lequel au moins une couche C est en contact avec une couche B.

10. Article rotomoulé selon l'une quelconque des revendications 1 à 9, dans lequel ledit au moins un polyester thermoplastique de la couche B et/ou de la couche C est choisi dans le groupe comprenant un poly(acide lactique), ses copolymères, un polyhydroxyalcanoate, une polycaprolactone, des copolyesters, des polyesteramides, et toute combinaison de ceux-ci, de préférence ledit au moins un polyester thermoplastique de la couche B et/ou de la couche C est un poly(acide lactique).

11. Article rotomoulé selon l'une quelconque des revendications 1 à 10, dans lequel ledit au moins un additif choisi parmi un agent de compatibilisation et/ou un modifiant choc de la couche C et/ou de la couche B est au moins un copolymère ou terpolymère comprenant :
(a) de 50 à 99,9 % en poids d'un éthylène ou d'un styrène monomère,
(b) de 0,1 à 50 % en poids d'un monomère contenant un anhydride insaturé, d'un monomère contenant un époxyde insaturé ou d'un monomère contenant un acide carboxylique insaturé,
(c) de 0 à 50 % en poids d'un monomère d'ester (méth)acrylique, de préférence de 0,1 à 50 % en poids d'un monomère d'ester (méth)acrylique.

12. Article rotomoulé selon l'une quelconque des revendications 1 à 11, dans lequel au moins un additif choisi parmi un agent de compatibilisation et/ou un modifiant choc de la couche C et/ou de la couche B est au moins un copolymère ou un terpolymère choisi dans le groupe comprenant les copolymères d'éthylène et de méthacrylate de glycidyle ; les terpolymères d'éthylène, d'esters acryliques monomères et de méthacrylate de glycidyle ; les terpolymères de styrène, d'esters acryliques monomères et de méthacrylate de glycidyle ; les terpolymères d'éthylène, d'esters acryliques monomères et d'anhydride maléique ; les terpolymères de styrène, d'esters acryliques monomères et d'anhydride maléique ; et n'importe quelle combinaison de ceux-ci ; de préférence, l'agent de compatibilisation est un copolymère d'éthylène et de méthacrylate de glycidyle.

13. Article rotomoulé selon l'une quelconque des revendications 1 à 12, dans lequel au moins une couche C est expansée.

14. Article rotomoulé selon l'une quelconque des revendications 1 à 13, comprenant en outre un ou plusieurs évents et/ou inserts en plastique ou en métal et/ou des nervures de renforcement.

15. Procédé pour préparer un article rotomoulé selon l'une quelconque des revendications 1 à 14, comprenant les étapes consistant à :
(i) fournir un moule ;
(ii) éventuellement appliquer, sur au moins une partie de la paroi interne dudit moule, au moins une couche A comprenant des fibres incorporées dans une résine d'ester vinylique ;
(iii) couler dans le moule au moins une couche B comprenant :
• de 40 à 100 %, de préférence de 75 à 100 % en poids par rapport au poids total de ladite couche B d'au moins un polyester thermoplastique ;
• de 0 à 60 % en poids par rapport au poids total de ladite couche B d'une composition de polyoléfine ; ladite composition comprenant au moins une polyoléfine, de préférence ladite au moins une polyoléfine étant un polyéthylène ; et
• de 0 à 20 % en poids par rapport au poids total de ladite couche B d'au moins un additif choisi parmi un agent de compatibilisation et/ou un modifiant choc ;
obtenir ainsi une couche moulée B comprenant au moins une surface externe et une surface interne,
(iv) éventuellement appliquer sur au moins une partie de la surface interne de la couche moulée B au moins une couche A comprenant des fibres incorporées dans une composition comprenant au moins une résine d'ester vinylique ;
(v) éventuellement appliquer sur au moins une partie de la surface externe de la couche moulée B au moins une couche A comprenant des fibres incorporées dans une composition comprenant au moins une résine d'ester vinylique ;
dans lequel au moins l'une des étapes (ii), (iv) ou (v) n'est pas facultative, et au moins une couche A est en contact avec une couche B, obtenant ainsi l'article selon l'une quelconque des revendications 1 à 14.
